# EUROPÄISCHE PATENTSCHRIFT

(11) **EP 3 863 863 B1**
(45) Veröffentlichungstag und Bekanntmachung des Hinweises auf die Patenterteilung: **18.12.2024**
(21) Anmeldenummer: 19789640.0
(22) Anmeldetag: 14.10.2019
(51) Int. Cl.: B42D 25/328

(54) **BEUGENDES SICHERHEITSELEMENT**
DIFFRACTIVE SECURITY ELEMENT
ÉLÉMENT DE SÉCURITÉ À DIFFRACTION

(30) Priorität: 12.10.2018 DE 102018217560
(43) Veröffentlichungstag der Anmeldung: 18.08.2021
(73) Patentinhaber: Bundesdruckerei GmbH, 10969 Berlin (DE)
(72) Erfinder: KULIKOVSKA, Olga, 14165 Berlin (DE)
(74) Vertreter: Patentanwälte Bressel und Partner mbB
(86) Internationale Anmeldenummer: PCT/EP2019/077811
(87) Internationale Veröffentlichungsnummer: WO 2020/074746

(56) Entgegenhaltungen:
- WO-A1-2006/021102
- US-A1- 2002 191 234
- "OPTICAL DOCUMENT SECURITY", 1 January 2005, ARTECH HOUSE, Boston, Mass. [u.a.], ISBN: 978-1-58053-258-7, article VAN RENESSE RUDOLF L.: "Volume holograms", pages: 54 - 252, XP093111755
- "Diffraction grating handbook, fourth edition", 2000, article C. PALMER: "Diffraction grating handbook, fourth edition", pages: 8 - 19, XP055306131

## Beschreibung

Die Erfindung betrifft ein Sicherheitselement, welches ein Beugungselement umfasst, welches insbesondere Licht im sichtbaren Wellenlängenbereich reflektierend beugt, sodass anhand der erfassten Beugung eine Verifikation eines mit dem Sicherheitselement versehenen Sicherheitsdokuments oder ähnlichen Gegenstands möglich ist.

Aus dem Stand der Technik ist es bekannt, Gegenstände, insbesondere Dokumente und Datenträger wie beispielsweise Ausweise, Führerscheine, Identifikationskarten, aber auch wertbehaftete Gegenstände wie Eintrittskarten, Verpackungen oder Ähnliches mit sogenannten Sicherheitselementen zu versehen, die mindestens ein Merkmal aufweisen, anhand dessen eine Echtheit des jeweiligen Gegenstands und/oder eine Fälschung oder Verfälschung, unautorisierte Duplizierung oder Ähnliches erkannt werden kann. Ein solches Merkmal wird als Sicherheitsmerkmal bezeichnet.

Eine Gruppe von Sicherheitselementen ist für eine optische Verifikation vorgesehen. Bei einer optischen Verifikation werden entweder durch einen menschlichen Betrachter oder über ein Erfassen einer Abbildung Eigenschaften und/oder gespeicherte Informationen überprüft oder optische Effekte auf ihr Vorhandensein und/oder ihre Ausgestaltung hin erfasst und ausgewertet.

Eine Gruppe von Sicherheitselementen umfasst Beugungselemente. Ein Beugungselement weist mindestens eine Beugungsstruktur auf, welche in der Lage ist, Licht aufgrund des physikalischen Effekts der Beugung zu beeinflussen. Zu den weit verbreiteten Beugungselementen gehören insbesondere Hologramme, aber auch Kinegramme, andere geprägte Oberflächenstrukturen oder Ähnliches.

Beugungsgitter sind z.B. im "Diffraction grating handbook" von C. Palmer, 4. Auflage, veröffentlicht 2000 auf den Seiten 8 bis 19 beschrieben.

Beugungstrukturen in Form von Volumenreflexionshologrammen sind im Kapitel "Volume-Reflection Holography" in "OPTICAL DOCUMENT SECURITY" von R. L. van Renesse, Art House, Bosten, Mass., (2005), Seiten 250-252 beschrieben.

Sehr weit verbreitet sind beispielsweise geprägte Oberflächenhologramme, bei denen eine in die Oberfläche geprägte Beugungsstruktur, sofern diese beispielsweise mit einer Metallschicht versehen ist oder mit einer transparenten Schicht mit hohem Brechungsindex überdeckt ist, Licht an der strukturierten Grenzfläche reflektierend beugt. Die geprägten Oberflächenhologramme gehören zu der Gruppe der sogenannten dünnen Hologramme. Solche Hologramme sind beispielsweise zur Absicherung von Kreditkarten und Bankkarten weit verbreitet. Eine weitere Gruppe von Hologrammen umfasst Volumenhologramme, bei denen die Beugungsstruktur im Volumen eines Materials gespeichert ist. Solche Hologramme werden in Abgrenzung zu den Oberflächenhologrammen, welche dünne Hologramme sind, als dicke Hologramme bezeichnet. Eine spezielle Ausprägung eines Volumenreflexionshologramms, wie es beispielsweise in Ausweisen verwendet wird, sowie dessen Herstellung sind in der Druckschrift EP 0 896 260 A2 beschrieben.

Die bekannten Sicherheitselemente, welche Licht reflektierend beugen, sind für eine Erfassung durch einen menschlichen Betrachter optimiert. Dies bedeutet, dass eine Soll-Belichtungsrichtung des für die Beugung vorgesehenen Lichts und eine Soll-Erfassungsrichtung, unter der das gebeugte Licht erfasst werden kann, am Auftreffort des Beugungselements einen Winkel einschließen, der eine einfache Beleuchtung und Erfassung durch einen Menschen ermöglicht. Dies bedeutet, dass sich die Einfallrichtung und die Beugungsrichtung deutlich voneinander unterscheiden, sodass ein von der Soll-Belichtungsrichtung und Soll-Erfassungsrichtung eingeschlossener Winkel größer als vorzugsweise 15 Grad bis 20 Grad ist. Besonders geeignete Beugungsgeometrien sehen beispielsweise vor, dass ein Beugungselement, welches in die Fläche eines Sicherheitsdokuments integriert ist, entlang einer Oberflächennormale des Beugungselements beleuchtet wird und eine Erfassung unter einem Winkel von 45 Grad gegenüber der Oberflächennormale vorgenommen wird. Alternativ kann die Erfassung parallel zur Oberflächennormale ausgeführt und eine Lichteinstrahlung unter einem Winkel von 45 Grad gegenüber der Oberflächennormale erfolgen.

Die Dokumente US 2002/191234 A1 und WO 2006/021102 A1 offenbaren jeweils ein Sicherheitselement mit einer Beugungsstruktur, die als Volumenreflexionshologramm ausgebildet ist, und mit einer zusätzlichen Beugungsstruktur. Diese Dokumente offenbaren nicht, dass der spitze Winkel kleiner 10 Grad ist.

Im Bereich der Sicherheitstechnik besteht ein großes Bedürfnis, immer neuartige Sicherheitselemente zu schaffen, die schwer nachzuahmen oder nachzubilden sind und zugleich zuverlässig ohne Hilfsmittel oder unter Zuhilfenahme weitverbreiteter Hilfsmittel verifizierbar sind.

Der Erfindung liegt somit die technische Aufgabe zugrunde, ein neuartiges Sicherheitselement mit einem in Reflexion beugenden Beugungselement zu schaffen, dessen eine Begungsstruktur möglichst verborgen ist.

Die Aufgabe wird erfindungsgemäß durch ein Sicherheitselement mit den Merkmalen des Anspruchs 1, ein Sicherheitsdokument mit den Merkmalen des Anspruchs 8 sowie ein Verfahren mit den Merkmalen des Anspruchs 9 geschaffen.

Der Erfindung liegt die Idee zugrunde, ein Beugungselement mit einer Beugungsstruktur zu schaffen, für welche eine Beugungsgeometrie existiert, bei der eine Soll-Belichtungsrichtung des für die Beugung vorgesehenen Lichts mit einer Soll-Erfassungsrichtung, unter der das reflektierend gebeugte Licht erfassbar ist, am Auftreffort des Beugungselements einen spitzen Winkel einschließt. Somit soll eine Verifikation, d.h. ein Herbeiführen der Beugung in dem Beugungselement ermöglicht werden, bei der eine Einfallrichtung des zu beugenden Lichts nahezu entgegengesetzt zu der Richtung des gebeugten Lichts ist. Ein solches Sicherheitselement mit einer Beugungsstruktur, welche eine Beugungsgeometrie aufweist, die das einfallende Licht nur in einem spitzen Winkel bezogen auf die Einfallsrichtung reflektierend beugt, ist bei einer Erfassung im Umgebungslicht nur schwer oder gar nicht wahrzunehmen. Die Ursache dafür liegt darin, dass eine Einstrahlung von Umgebungslicht nicht aus der Erfassungsrichtung, d.h. auf der Verbindungslinie von Sicherheitselement und Auge, erfolgen kann.

Ein Sicherheitselement lässt sich jedoch mit einer Anordnung nachweisen, bei der eine Erfassungsoptik und eine Lichtquelle nahe zueinander benachbart in einer Ebene angeordnet sind. Eine solche Anordnung findet sich beispielsweise in den meisten multifunktionalen Mobiltelefonen, welche beispielsweise eine an einer Rückseite ausgebildete Kamera und eine häufig als Blitz bezeichnete, unmittelbar neben der Optik der Kamera angeordnete Lichtquelle aufweisen. Ein Abstand zwischen einem Zentrum der Abbildungsoptik und einem Zentrum einer solchen Lichtquelle beträgt beispielsweise 1 Zentimeter. Bei einer bevorzugten Erfassungsentfernung von etwa 20 Zentimeter zu dem Sicherheitselement ergeben sich an einem Auftreffort eingeschlossene Winkel von weniger als 3 Grad zwischen der Einfallrichtung des Lichts und der Beugungsrichtung. Ein solches Sicherheitselement, bei dem eine Beugung unter spitzem Winkel stattfindet, lässt sich somit mit einem solchen Mobiltelefon einfach verifizieren, sofern eine Abbildung unter Verwendung der in das Mobiltelefon integrierten Beleuchtungseinrichtung ausgeführt wird.

### Definitionen

Als Beugungselement wird eine körperliche Einheit bezeichnet, welche in der Lage ist, Licht im sichtbaren Wellenlängenbereich zu beugen. Beugungselemente können eine Beugungsstruktur oder mehrere Beugungsstrukturen umfassen. Eine Beugungsstruktur ist die Struktur, beispielsweise ein Oberflächenrelief oder eine Brechungsindexmodulation im Volumen eines Materials, welche eine Beugung von Licht bewirkt. Ein Beugungselement umfasst somit mindestens eine Beugungsstruktur, kann jedoch mehrere Beugungsstrukturen umfassen, die eine voneinander verschiedene, unterschiedliche Lichtbeugung verursachen.

In eine Fotopolymerschicht können beispielsweise ein oder mehrere Beugungsstrukturen belichtet sein. Sind beispielsweise mehrere Volumenhologramme in die Fotopolymerschicht belichtet, so weist dieses mehrere Beugungsstrukturen im Sinne des hier beschriebenen auf. Hierbei können je nach Wahl des Materials der Fotopolymerschicht zwei oder mehr Beugungsstrukturen im selben Volumenbereich und/oder auch nebeneinander oder verschachtelt angeordnet sein.

Die geometrische Anordnung der Lichtstrahlung, welche zur Rekonstruktion einer Beugungsstruktur, beispielsweise des Hologramms benötigt wird, und des gebeugten Lichts, welches die Rekonstruktion des Hologramms darstellt, jeweils relativ zu dem Hologramm bzw. dessen Beugungsstruktur wird als Rekonstruktionsgeometrie bezeichnet.

Als Verallgemeinerung der Rekonstruktionsgeometrie wird der Begriff Beugungsgeometrie verwendet, der in analoger Weise Anordnung und Lage im Raum relativ zu der Beugungsstruktur von einfallendem Licht und gebeugtem Licht, unter denen eine Beugung stattfindet, bezeichnet.

Eine Beugungsgeometrie oder Rekonstruktionsgeometrie ist somit durch eine Soll-Belichtungsrichtung und eine Soll-Erfassungsrichtung, unter der gebeugtes Licht erfassbar ist, relativ zu der Beugungsstruktur definiert. Da die Beugungsstruktur in dem körperlichen Gegenstand des Beugungselements ausgebildet ist, lassen sich die Beugungsgeometrie und die Rekonstruktionsgeometire in gleicher Weise mittels einer Soll-Belichtungsrichtung und einer Soll-Erfassungsrichtung, unter der gebeugtes Licht erfassbar ist, relativ zu dem Beugungselement definieren.

Bei einer Verifikation eines als Sicherheitselement ausgebildeten Beugungselements wird somit die Beugungsgeometrie durch die Anordnung einer Lichtquelle sowie gegebenenfalls deren Beschaffenheit, eine Anordnung einer Erfassungseinrichtung sowie gegebenenfalls deren Beschaffenheit und die Anordnung des Beugungselements jeweils relativ zueinander im Raum festgelegt.

Als Belichtungsrichtung wird eine Richtung bezeichnet, entlang der sich das Licht einer Lichtquelle bei der gerichteten Beleuchtung eines Beugungselements zu dem Beugungselement ausbreitet. Als Soll-Belichtungsrichtung wird die Richtung relativ zu einer Beugungsstruktur bezeichnet, entlang derer Licht auf die Beugungsstruktur auftreffen muss, damit dieses auftreffende Licht von der Beugungsstruktur gebeugt wird.

In der Regel kann die Soll-Belichtungsrichtung durch eine Verbindungslinie einer Mitte einer Lichtaustrittsfläche einer Lichtquelle zu einer Mitte der Beugungsstruktur, welche eine Beugung verursacht, angegeben werden. Eine Soll-Erfassungsrichtung ist entsprechend durch eine Line von der Mitte der Beugungsstruktur zu einer Position festgelegt, an der ein Beugungsbild der entsprechenden Beugungsstruktur mittels einer Optik der Erfassungsvorrichtung erfasst wird oder erfassbar ist.

Da das Licht einer Lichtquelle in der Regel eine Divergenz aufweist und die Beugungsstruktur eines Beugungselements zusätzlich häufig eine flächige Ausdehnung aufweist, ist eine Belichtungsrichtung, welche über die Verbindungslinie Lichtquelle-Mitteder-Beugungsstruktur definiert ist, nicht identisch mit Einfallrichtungen einzelner Lichtstrahlen im Sinne der geometrischen Optik an jeweiligen Auftrefforten auf dem Beugungselements mit der Beugungsstruktur, an der eine Beugung des jeweiligen Lichtstrahls stattfindet. Wird von einem einzelnen Strahl im Sinne der geometrischen Optik gesprochen, so wird im Folgenden der Begriff Einfallrichtung verwendet.

Eine ähnliche Situation ergibt sich bei detaillierter Betrachtung auch für das gebeugte Licht. Das gebeugte Licht kann von einer Beugungsstruktur eines Beugungselements in unterschiedliche Richtungen gebeugt werden. Diese Richtungen werden als Beugungsrichtungen bezeichnet.

Die Soll-Belichtungsrichtung und Soll-Erfassungsrichtung sowie die Einfallrichtung und die Beugungsrichtung sind jeweils bezogen auf die entsprechende Beugungsstruktur oder das Beugungselement definiert. D.h., ändert man die Orientierung des Beugungselements im Raum, so ändert sich die Einfallrichtung, unter der eine Beugung eintritt, im Raum entsprechend. Somit wird das Bezugssystem für die Definition der Einfallrichtung und der Beugungsrichtung sowie der Soll-Belichtungsrichtung und Soll-Erfassungsrichtung in der Regel mit der Beugungsstruktur gekoppelt und die Richtungen über Winkel zum Beugungselement oder dessen Oberflächennormale angegeben.

Als spitzwinklige Beugung wird eine Beugung bezeichnet, bei der die Soll-Belichtungsrichtung und die Soll-Erfassungsrichtung sich im Beugungselement kreuzen und dort einen spitzen Winkel kleiner 10 Grad, vorzugsweise kleiner 5 Grad, noch bevorzugter kleiner 3 Grad einschließen.

Allgemein sind Richtungen bezüglich eines Beugungselements oder einer darin verkörperten Beugungsstruktur mittels einer Auftreffposition auf oder in der Beugungsstruktur, auf die die Richtung weist oder von der die Richtung ausgeht, und zwei Winkel in einem mit der Beugungsstruktur verknüpften Koordinatensystem angebbar, dessen Ursprung mit der Auftreffposition zusammenfällt. Das Koordinatensystem ist in der Regel so gewählt, dass ein Winkel (Elevationswinkel) gegen die Oberflächennormale des Beugungselements über der Auftreffposition gemessen wird und der zweite Winkel (Azimuthalwinkel) in der Ebene des Beugungselements gegen eine Koordinatenachse gemessen wird, welche die Orientierung der Beugungsstruktur definiert. Die Auftreffposition wird auch als Auftreffort bezeichnet.

In den unten dargestellten Figuren sind jeweils ohne Beschränkung der Allgemeinheit aus Gründen der Vereinfachung Ausführungsformen gezeigt, bei denen die Azimutalwinkel der dargestellten Richtungen gleich sind (beide Richtungen, d.h. Einfallrichtung und Beugungsrichtung oder Soll-Belichtungsrichtung und Soll-Erfassungsrichtung, liegen auf derselben Seite der Oberflächennormale) oder um 180 Grad verschieden sind (beide Richtungen liegen auf entgegengesetzten Seiten der Oberflächennormale des Beugungselements).

Wird von dem Winkel zwischen zwei Richtungen gesprochen, so ist hier jeweils der Winkel in der Ebene gemeint, in der die zwei Richtungen und die gemeinsame Auftreffposition liegen.

### Bevorzugte Ausführungsformen

Bei einer besonders bevorzugten Ausführungsform wird somit ein Sicherheitselement, umfassend ein in Reflexion beugendes Beugungselement, geschaffen, wobei das Beugungselement mindestens eine Beugungsstruktur umfasst, welche eine Beugungsgeometrie aufweist, bei der eine Soll-Belichtungsrichtung des für eine Beugung vorgesehenen Lichts und eine Soll-Erfassungsrichtung, unter der das reflektierend gebeugte Licht erfassbar ist, am Auftreffort einen spitzen Winkel einschließen.

Dieses ist, insbesondere bei Berücksichtigung einer möglichen Divergenz des für die Beleuchtung verwendeten Lichts, einer Ausdehnung der verwendeten Lichtstrahlung, einer Ausdehnung der Beugungsstruktur und einer Berücksichtigung von Akzeptanzeigenschaften der Erfassungsvorrichtung, gleichbedeutend damit, dass ein Sicherheitselement, umfassend ein in Reflexion beugendes Beugungselement, geschaffen wird, wobei das Beugungselement mindestens eine Beugungsstruktur umfasst, welche eine Beugungsgeometrie aufweist, bei der Einfallrichtungen des für die Beugung vorgesehenen Lichts und die entsprechenden Beugungsrichtungen des reflektierend gebeugten Lichts jeweils einen spitzen Winkel einschließen.

Erfindungsgemäß ist der eine spitze Winkel kleiner 10 Grad oder bevorzugter kleiner 5 Grad und noch bevorzugter kleiner 3 Grad. Ist der spitze Winkel, zwischen der Soll-Belichtungsrichtung und der Soll-Erfassungsrichtung, d.h. zwischen Einfallrichtungen des Lichts und Beugungsrichtungen, für die eine Beugungsgeometrie möglichst klein gewählt, so ist eine Erkennung und ein Auffinden dieses Beugungseffekts bei einer in Augenscheinnahme des mit dem Sicherheitselement verknüpften Sicherheitsgegenstands nur schwer möglich.

Eine besonders große Winkelselektivität und auch Wellenlängenselektivität wird erfingungsgemäß erreicht, indem die eine Beugungsstruktur des Beugungselements als Volumenreflexionshologramm ausgebildet wird.

Um das Vorhandensein des unter einem spitzen Winkel auftretenden Beugungseffekts der einen Beugungsstruktur in dem Beugungselement zu verbergen, ist eine zusätzliche reflektierend beugende Beugungsstruktur vorgesehen, wobei die zusätzliche Beugungsstruktur eine zusätzliche Beugungsgeometrie aufweist, bei der eine zusätzliche Soll-Belichtungsrichtung des eine Beugung herbeiführenden Lichts und eine Soll-Erfassungsrichtung, unter der das reflektierend gebeugte Licht erfassbar ist, am Auftreffort einen Winkel einschließen, der größer als ein Vielfaches des einen spitzen Winkels ist, vorzugsweise deutlich größer ist, d.h. einen Winkel einschließen, der betragsmäßig größer als das Dreifache des einen spitzen Winkels oder größer als das Vierfache des einen spitzen Winkels ist.

Bevorzugt werden Beugungsgeometrien oder Rekonstruktionsgeometrien, die von einer Geometrie abweichen, unter der eine spiegelnde Reflexion nach den Gesetzen der geometrischen Optik an dem Beugungselement auftreten würden.

Schwieriger zufällig aufzufinden sind Beugungsstrukturen, deren Rekonstruktionsgeometrie bzw. Beugungsgeometrie eine Soll-Belichtungsrichtung und Soll-Erfassungsrichtung aufweisen, die jeweils gegenüber der Oberflächennormale des Beugungselements einen Winkel größer 10 Grad bevorzugter größer 20 Grad, am bevorzugtesten größer 30 Grad aufweisen.

Um eine zuverlässige Unterscheidung zwischen einem herkömmlichen Retroreflektor und dem Beugungselement zu ermöglichen, ist das Beugungselement bei einer bevorzugten Ausführungsform als Hologramm ausgebildet. Hologramme können aufgrund der darin gespeicherten Information von Retroreflektoren gut unterschieden werden, die flächig lediglich das eingestrahlte Licht in der Richtung zurückwerfen, aus der die Einstrahlung des Lichts erfolgt ist.

Eine weitere Möglichkeit, die Benutzbarkeit des Beugungselements zu erhöhen, besteht darin, dass das Beugungselement eine von der einen Beugungsstruktur verschiedene weitere Beugungsstruktur umfasst, für die eine weitere von der einen Beugungsgeometrie verschiedene Beugungsgeometrie existiert, bei der eine weitere Soll-Belichtungsrichtung des einfallenden Lichts und eine weitere Soll-Erfassungsrichtung, unter der das reflektierend gebeugte Licht erfassbar ist, am Auftreffort einen weiteren spitzen Winkel einschließen. Der spitze Winkel und der weitere spitze Winkel können denselben Betrag aufweisen, können jedoch auch verschiedene Beträge aufweisen. Der spitze Winkel und der weitere spitze Winkel sind jeweils kleiner als ein vorgegebener Wert, der beispielsweise 3 Grad beträgt.

Besonders bevorzugt werden Ausführungsformen, bei denen sich die Beugungsstruktur und die weitere Beugungsstruktur flächig überlappen, vorzugsweise vollständig überlappen, d.h. die eine Beugungsstruktur die weitere Beugungsstruktur vollständig überlappt oder umgekehrt.

Als flächig überlappend werden auch Ausführungsformen angesehen, bei denen die beiden Beugungsstrukturen jeweils in mehreren getrennten Regionen ausgebildet sind, die jedoch so ineinander verschachtelt sind, beispielsweise in schmalen alternierenden Streifen ausgebildet sind, dass bei der Beugung ein gemeinsames Beugungsbild der Regionen einer entsprechenden Beugungsstruktur entsteht.

Besonders bevorzugt unterscheiden sich ein Beugungsbild, welches unter der einen Beugungsgeometrie erfasst wird, und ein weiteres Beugungsbild, welches unter der weiteren Beugungsgeometrie erfasst wird, voneinander. Beispielsweise hinsichtlich der Farbe bzw. Wellenlänge des Lichts, unter der die Beugungsbilder rekonstruieren.

Bei einer Ausführungsform existieren eine oder mehrere Belichtungsrichtungen für Licht, die zwischen der einen Soll-Belichtungsrichtung und der weiteren Soll-Belichtungsrichtung liegen, bei der oder denen an der Beugungsstruktur keine spitzwinkelige Beugung erfassbar ist. D.h. bei einer Einstrahlung von zu beugendem Licht entlang dieser Belichtungsrichtung oder Belichtungsrichtungen existiert keine Erfassungsrichtung unter einem spitzem Winkel zu der entsprechenden Belichtungsrichtung, unter der eine Beugungsabbildung zu erfassen ist.

Wird beispielsweise mit einem Mobiltelefon unter Verwendung der in das Mobiltelefon eingebauten Beleuchtungseinrichtung und der Kamera unter der einen Beugungsgeometrie eine Abbildung erfasst, in der ein Beugungsbild erkennbar ist, und das Mobiltelefon in die zweite Beugungsgeometrie kontinuierlich oder schrittweise überführt, wobei kontinuierlich oder schrittweise Abbildungen erfasst werden, während Licht der Beleuchtungseinrichtung des Mobiltelefons auf das Beugungselement eingestrahlt wird, so verschwindet das Beugungsbild in der erfassten Abbildung oder den erfassten Abbildungen und bei Erreichen der weiteren Soll-Belichtungsrichtung und der weiteren Soll-Erfassungsrichtung der weiteren Beugungsgeometrie wird das weitere Beugungsbild in den Abbildungen erfasst.

Dieses unter der weiteren Beugungsgeometrie erfasste weitere Beugungsbild ist bei einer besonders bevorzugten Ausführungsform verschieden von dem einen Beugungsbild, welches unter der einen Beugungsgeometrie erfassbar ist und erfasst wird. Beispielsweise kann das Beugungselement bei einer Ausführungsform eine als Volumenhologramm ausgebildete erste Beugungsstruktur umfassen, welche Licht einer ersten Wellenlänge, beispielsweise im grünen Spektralbereich, spitzwinklig beugt, und die weitere Beugungsstruktur ausgebildet sein, Licht im roten Wellenlängenbereich spitzwinklig zu beugen. Ist die Lichtquelle des verwendeten Mobiltelefons, wie dies heutzutage üblich ist, als Weißlichtlichtquelle ausgebildet, so wird unter der einen Beugungsgeometrie ein grünes Beugungsbild erfasst und unter der weiteren Beugungsgeometrie ein rotes Beugungsbild erfasst. Bei einer kontinuierlichen Überführung wechselt die Farbe entweder unmittelbar oder es gibt Winkelbereiche dazwischen, unter denen gar keine Beugungsabbildung erfassbar ist.

Weiterbildungen können vorsehen, dass nicht nur eine weitere, sondern eine Vielzahl weiterer unter einem spitzen Winkel beugende Beugungsstrukturen in dem Beugungselement ausgebildet sind. Besonders bevorzugt unterscheiden sich die von den verschiedenen weiteren Beugungsstrukturen unter den verschiedenen weiteren Beugungsgeometrien erfassbaren Beugungsbilder voneinander. Hierdurch wird eine Nachahmung oder Verfälschung durch ein Einbringen nur reflektierender nicht beugender Elemente deutlich erschwert und die Verifikation deutlich erleichtert.

Eine Ausführungsform sieht daher vor, dass das Beugungselement eine Vielzahl von weiteren Beugungsstrukturen umfasst, die von der einen Beugungsstruktur und von den übrigen der Vielzahl von weiteren Beugungsstrukturen verschieden sind, wobei für jede der Vielzahl der weiteren Beugungsstrukturen eine weitere Beugungsgeometrie existiert, bei der eine weitere Soll-Belichtungsrichtung des einfallenden Lichts und eine weitere Soll-Erfassungsrichtung, unter der das reflektierend gebeugte Licht erfassbar ist, am Auftreffort einen weiteren spitzen Winkel einschließen, wobei die weitere Beugungsgeometrie jeweils verschieden von der einen Beugungsgeometrie und den übrigen Beugungsgeometrien der übrigen der Vielzahl von weiteren Beugungsstrukturen ist.

Bei einer Ausführungsform ist vorgesehen, dass ein Belichtungswinkel der Soll-Belichtungsrichtung der einen Beugungsgeometrie und ein weiterer Belichtungswinkel der weiteren Soll-Belichtungsrichtung jeweils gemessen gegen die Oberflächennormale am jeweiligen Auftreffort sich um einen Winkelbetrag unterscheiden, der größer als ein Betrag des spitzen Winkels der einen Beugungsgeometrie und größer als ein weiterer Betrag des weiteren spitzen Winkels der weiteren Beugungsgeometrie ist.

Beispielsweise ist die zusätzliche Beugungsstruktur als Volumenreflexionshologramm ausgebildet, welches Licht derselben Wellenlänge beugt wie die erste Beugungsstruktur, die ebenfalls als Volumenreflexionshologramm ausgebildet ist.

Andere Ausführungsformen können vorsehen, dass die Beugungsstrukturen als unterschiedliche Typen ausgebildet sind. Beispielsweise kann die zusätzliche Beugungsstruktur ein Volumenreflexionshologramm sein und die eine unter einem spitzen Winkel beugende Beugungsstruktur ein Oberflächenreliefhologramm sein.

Besonders bevorzugt überlappen sich die zusätzliche Beugungsstruktur und die eine Beugungsstruktur flächig. Hierdurch wird die eine spitzwinkelig beugende eine Beugungsstruktur besonders gut in dem Beugungselement "verborgen".

Als besonders vorteilhaft hat es sich erwiesen, die zusätzliche Beugungsstruktur als ein herkömmliches Volumenreflexionshologramm auszubilden, das bei einer Raumbelichtung betrachtet, d.h. erfasst, werden kann. Insbesondere vorteilhaft ist ein Hologramm eines dreidimensionalen Objektes, wobei ein Eindruck des 3D-Objektes bei dem Betrachter hervorgerufen wird.

Bei einer solchen zusätzlichen Beugungsstruktur ändert sich das Beugungsbild abhängig von der Erfassungsrichtung, da diese Gegenstände je nach flächiger Ausdehnung des Beugungselements eine mehr oder weniger große Parallaxe aufweisen. Bei konstant gehaltener und für ein Auftreten einer Beugung korrekt gewählter Soll-Belichtungsrichtung des zu beugenden Lichts gibt es unter leicht variierenden Erfassungsrichtungen leicht variierende Beugungsbilder. Durch einfallendes Licht verursachte unbeabsichtigte Beugungs- oder Lichtbeeinflussungseffekte der einen Beugungsstruktur fallen einem Betrachter somit nicht sofort auf. Die eine spitzwinklig beugende Beugungsstruktur bleibt somit verborgen, sofern sie nicht mit einer geeigneten Einrichtung, bei der Lichteinstrahlung und Erfassung aus nahezu entgegengesetzten Richtungen erfolgen, und bei Lichteinstrahlung unter der richtigen Soll-Belichtungsrichtung gemäß der einen Beugungsgeometrie verifiziert wird.

Als besonders vorteilhaft hat es sich erwiesen, die zusätzliche Beugungsstruktur als Volumenreflexionshologramm von flächig regelmäßig angeordneten Objekten auszubilden, welche eine dreidimensionale Struktur aufweisen. Beispielsweise können ein Gitter, ein Volumenhologramm eines gitterartigen Netzes oder ein Volumenhologramm von in einem zwei- oder dreidimensionalen, vorzugsweise regelmäßigen Raster angeordneten spiegelnden oder transparenten Polyedern verwendet werden.

Bei einer weiteren Ausführungsform ist vorgesehen, dass die eine Beugungsgeometrie und die zusätzliche Beugungsgeometrie so ausgebildet sind, dass diese eine gemeinsame Soll-Erfassungsrichtung aufweisen, d.h. dass die eine Soll-Erfassungsrichtung und die zusätzliche Soll-Erfassungsrichtung zusammenfallen. Erfasst man unter der Soll-Erfassungsrichtung eine Abbildung, während Licht unter der zusätzlichen Soll-Belichtungsrichtung eingestrahlt wird, so erfasst man das Beugungsbild der zusätzlichen Beugungsstruktur. Wird nun zusätzlich zu beugendes Licht unter der Soll-Belichtungsrichtung der einen Beugungsgeometrie der einen Beugungsstruktur eingestrahlt, so erfasst man zusätzlich das Beugungsbild der einen Beugungsstruktur. Die Beugungsbilder sind vorzugsweise so ausgestaltet, dass sich das eine Beugungsbild der einen Beugungsstruktur und das zusätzliche Beugungsbild der zusätzlichen Beugungsstruktur zu einem Gesamtbeugungsbild ergänzen. Beispielsweise kann das zusätzliche Beugungsbild alphanumerische Zeichen enthalten, die durch alphanumerische Zeichen des einen Beugungsbildes so ergänzt werden, dass sich in dem Gesamtbeugungsbild für einen Betrachter erfassbare Worte oder Zahlen ergeben. Andere Ausführungsformen können vorsehen, dass das zusätzliche Beugungsbild das Portrait einer Person, dem das Beugungselement zugeordnet ist, in einer ersten Wellenlänge bzw. Farbe enthält und in dem einen Beugungsbild der einen Beugungsstruktur das Portrait derselben Person in einer anderen Wellenlänge bzw. Farbe enthalten ist und diese sich so ergänzen, dass ein mischfarbiges Portrait aufgrund der Farbaddition der beiden unterschiedlichen gebeugten Wellenlängen auftritt.

Hier ist eine Vielzahl weiterer Ausgestaltungen möglich, um Mischfarbeffekte zu erzeugen oder auch Beugungsbilder vollfarbig zu ergänzen.

Die einzelnen hier beschriebenen Beugungsstrukturen, d.h. die eine Beugungsstruktur, eine oder mehrere weitere Beugungsstrukturen und/oder die zusätzliche Beugungsstruktur, können in einzelnen getrennten Materialschichten ausgebildet sein, die einander überlappend in dem Beugungselement integriert sind. Beispielsweise können die einzelnen Beugungsstrukturen jeweils als dünne oder dicke Hologramme in eine transparente Hologrammschicht beispielsweise aus einem Fotopolymer belichtet sein. Diese einzelnen getrennt ausgebildeten Schichten können dann übereinander geschichtet miteinander verbunden werden oder sein. Alternativ können mehrere oder alle der Beugungsstrukturen auch gemeinsam in eine Fotopolymerschicht belichtet sein. Je nach Art des Materials und des Beugungseffektes, kann es vorgesehen sein, dass die einzelnen Beugungsstrukturen aus kleinen zellenartigen, beispielsweise quadratischen Flächenelementen bestehen, die ineinander verschachtelt die flächige Ausdehnung des Beugungselements ergeben. Auch bei einer solchen Ausbildung wird hier davon ausgegangen, dass sich die einzelnen Beugungsstrukturen flächig überlappen. Die Flächenelemente werden vorzugsweise so klein gewählt, dass diese bei der Verifikation im Beugungsbild nicht wahrgenommen werden.

Andere Ausführungsformen können vorsehen, dass die verschiedenen Beugungsstrukturen zumindest zum Teil nebeneinander ausgebildet sind. So können mehrere verschiedene Oberflächenprägestrukturen verwendet werden.

Wieder andere Ausführungsformen weisen sowohl Beugungsstrukturen, die sich ganz oder teilweise überlappen, als auch nebeneinander ausgebildete Beugungsstrukturen auf. Beugungsstrukturen können auch beabstandet voneinander in einem Beugungselement ausgebildet sein.

Für eine Verifikation eines solchen Sicherheitsmerkmals ist es vorgesehen, unter einer Soll-Erfassungsrichtung einer Beugungsgeometrie eine Abbildung ohne Einstrahlung von Licht unter der zugehörigen einen Soll-Belichtungsrichtung zu erfassen und mit einer Abbildung zu vergleichen, die bei einer Beleuchtung mit Licht entlang der Soll-Belichtungsrichtung der einen Beugungsgeometrie, erfasst wird. Ist bei der Einstrahlung von Licht unter spitzem Winkel zur Soll-Erfassungsrichtung ein Beugungsbild zu erkennen, so wird das Beugungselement als echt verifiziert. Um das Beugungsbild von einem Hintergrund besser unterscheiden zu können, wird eine Abbildung mit Einstrahlung von Licht unter spitzem Winkel zur Erfassungsrichtung mit einer Abbildung verglichen, die ohne eine Einstrahlung von Licht unter dem spitzen Winkel erfasst ist.

Bei wieder einer anderen Ausführungsform wird unter einer Vielzahl von Geometrien jeweils unter Einstrahlung von Licht in einem spitzen Winkel zur Erfassungsrichtung jeweils eine Abbildung des Beugungselements erfasst und das Beugungselement oder Sicherheitselement als echt verifiziert, sofern eine Belichtungs- und Erfassungsrichtung gefunden werden, unter denen ein Beugungsbild erfasst wird.

Bei einer Weiterbildung wird das Sicherheitselement oder Beugungselement nur als echt verifiziert, wenn in den mehreren erfassten Abbildungen für mindestens zwei oder mindestens drei oder mehr verschiedene Geometrien entsprechende Beugungsbilder erfasst werden. Ein Beugungsbild wird nur als verschieden von einem anderen Beugungsbild angesehen, sofern der Unterschied nicht nur in der Änderung der Ansichtsrichtung eines dreidimensionalen in der Beugungsstruktur holografisch abgebildeten Gegenstands ist.

Wird eine Mehrzahl von Beugungselementen hergestellt, so können die einzelnen Beugungselemente individuell ausgebildet werden, Dieses bedeutet, dass die individuelle Ausgestaltung das jeweilige Beugungselement gegenüber den anderen Beugungselementen einzigartig macht. Eine Individualisierung kann beispielsweise über das Speichern von persönlichen Daten einer Person, der das Sicherheitselement mit der Beugungsstruktur zugeordnet wird, in der Beugungsstruktur erfolgen. Diese Individualisierung wird auch als Personalisierung bezeichnet.

Ein Sicherheitsdokument erhält man, indem man das Sicherheitselement mit der Beugungsstruktur in einen Dokumentkörper integriert. Beispielsweise kann das Beugungselement als Halbzeug ausgebildet werden und dann mit weiteren Substratschichten oder Materialschichten in einem Laminationskörper zusammengefügt werden. Das Sicherheitselement kann auch als Patch auf einem Sicherheitsdokument aufgeklebt oder auf andere Weise befestigt werden oder Zwischensubstratschichten oder Materialschichten eingefügt werden. Ebenso ist es möglich, das Beugungselement ganz oder teilweise in Materialschichten eines Dokumentkörpers einzuprägen.

Nachfolgend wird die Erfindung unter Bezugnahme auf eine Zeichnung näher erläutert. Hierbei zeigen:
- Fig. 1: schematisch ein Sicherheitsdokument mit einem als Beugungselement ausgebildeten Sicherheitselement;
- Fig. 2: eine Schnittansicht durch ein Sicherheitselement;
- Fig. 3: eine weitere Schnittansicht durch ein Sicherheitselement;
- Fig. 4: eine Schnittansicht durch ein Sicherheitselement, welches eine zusätzliche Beugungsstruktur aufweist, welche einfach durch einen menschlichen Betrachter verifizierbar ist;
- Fig. 5: eine Schnittansicht durch ein Sicherheitselement, bei dem eine Beugungsstruktur und eine zusätzliche Beugungsstruktur flächig überlappend ausgebildet sind;
- Fig. 6: eine Schnittansicht durch ein Sicherheitselement, bei dem eine Beugungsstruktur und eine zusätzliche Beugungsstruktur benachbart zueinander ausgebildet sind;
- Fig. 7: eine Schnittansicht durch ein Sicherheitselement, bei dem eine Beugungsstruktur und eine weitere Beugungsstruktur benachbart zueinander ausgebildet sind;
- Fig. 8: eine weitere Schnittansicht durch ein Sicherheitselement, bei dem eine Beugungsstruktur für eine Verifizierung beispielsweise mit einem Mobiltelefon und eine zusätzliche Beugungsstruktur für eine menschliche Verifizierung benachbart zueinander ausgebildet sind;
- Fig. 9a-9e: schematische Ansichten, die eine Beugungsgeometrie und ein bei der jeweiligen Beugungsgeometrie erfassbares Beugungsbild schematisch zeigen;
- Fig. 10a bis 16a: schematische Draufsichten auf Beugungselemente mit mehreren Beugungsstrukturen; und
- Fig. 10b bis 16b: schematische Schnittansichten der Beugungselemente mit mehreren Beugungsstrukturen der Fig. 10a bis 16a.

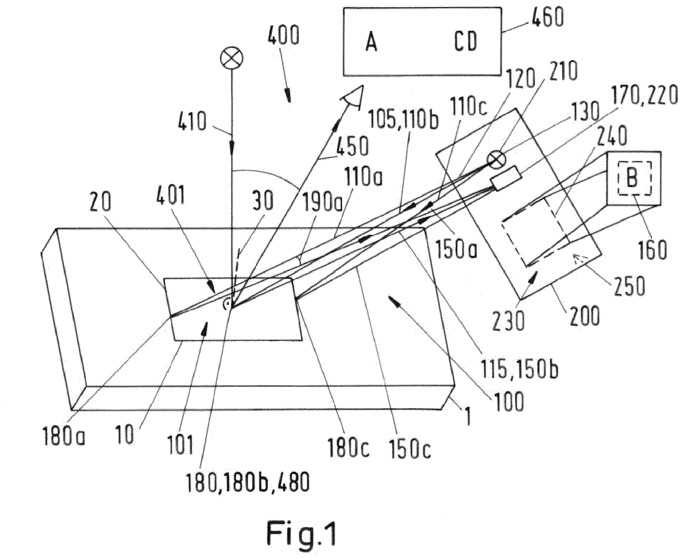

In Fig. 1 ist schematisch ein Sicherheitsdokument 1 dargestellt. Dies kann beispielsweise eine Personalausweiskarte, ein Führerschein, eine Bankkarte oder Ähnliches sein. Zur Absicherung gegen Fälschungen und Verfälschungen umfasst das Sicherheitsdokument 1 ein Sicherheitselement 10. Das Sicherheitselement 10 ist als Beugungselement 20 ausgebildet. Das Beugungselement 20 umfasst eine Beugungsstruktur 101. Entlang einer Soll-Belichtungsrichtung 105 wird Licht 120 einer örtlich begrenzten Lichtquelle 130 gestrahlt. Unter einer Soll-Erfassungsrichtung 115 wird von einer Erfassungseinrichtung 170 eine Abbildung erfasst, die ein Beugungsbild 160 umfasst. Die Soll-Belichtungsrichtung 105 und Soll-Erfassungsrichtung 115 schließen einen spitzen Winkel 190 ein. Da das Licht 120 der Lichtquelle 130 leicht divergent ist und das Beugungselement 20 eine flächige Ausdehnung aufweist, trifft das Licht 120 unter leicht unterschiedlichen Einfallrichtungen 110a bis 110c an entsprechenden Auftrefforten 180a bis 180c auf das Beugungselement 20. Die entsprechenden Beugungsrichtungen 150a bis 150c schließen jeweils mit der Einfallrichtung 110a bis 110c an dem Auftreffort 180a bis 180c einen spitzen Winkel 190a bis 190c ein. Diese Winkel 190, 190a bis 190c sind alle kleiner als ein vorgegebener Winkel. Bei einem so ausgestalteten Beugungselement kann das in dem Beugungselement 20 gespeicherten Beugungsbild 160 vollständig in einer Abbildung erfasst werden. Im dargestellten Beispiel fallen die Soll-Belichtungsrichtung 105 und die mit 110b gekennzeichnete Einfallrichtung sowie die Soll-Erfassungsrichtung 115 und die Beugungsrichtung 150b als auch die Auftrefforte 180, 180b zusammen.

Die Lichtquelle 130 ist beispielsweise eine Beleuchtungseinrichtung 210 eines Mobiltelefons 200. Die Erfassungseinrichtung 170 ist beispielsweise eine in engem Abstand zu der Beleuchtungseinrichtung 210 angeordnete Kamera 220 des Mobiltelefons 200. Die Beleuchtungseinrichtung 210 und die Kamera 220 befinden sich in der Regel auf einer Rückseite 230 des Mobiltelefons 200. Das Beugungsbild 160 kann in der Regel auf einer Anzeige 240 auf einer Vorderseite 250 des Mobiltelefons 200 zur Anzeige gebracht werden. Vorzugsweise ist der spitze Winkel 190 zwischen der Soll-Belichtungsrichtung 105 des Lichts und der Soll-Erfassungsrichtung 115, unter der das Beugungsbild 160 beobachtbar ist, deutlich kleiner als 10 Grad, bevorzugt kleiner als 5 Grad und am bevorzugtesten kleiner als 3 Grad. Ein solches Beugungselement 20 ist beispielsweise mit einem Mobiltelefon, bei dem die Beleuchtungseinrichtung 210 und die Kamera 220 etwa 1 Zentimeter voneinander beabstandet sind, aus einer Entfernung im Bereich zwischen 50 Zentimeter und 20 Zentimeter vom Auftreffort 180 des einfallenden Lichts "erfassbar".

In einer einfachen Ausführungsform umfasst das Beugungselement 20 des Sicherheitselements 10 genau eine Beugungsgeometrie, unter der Licht gebeugt und ein Beugungsbild erfassbar ist. Ein Auffinden der Beugungsbilds 160 kann dann zur Verifikation des Sicherheitselements 10 verwendet werden. Eine weitere verbesserte Verifizierung wird dadurch erreicht, dass ein Belichtungswinkel 111 der Soll-Belichtungsrichtung 105 oder ein Erfassungswinkel 112 Soll-Erfassungsrichtung 115 gemessen gegen eine Oberflächennormale 30 zusätzlich ermittelt wird und mit dem jeweiligen vorgegebenen Wert verglichen wird. Somit kann zusätzlich zum Auffinden des Beugungsbilds geprüft werden, ob die zur Erzeugung des Beugungsbildes verwendete Geometrie mit der einen vorfestgelegten Beugungsgeometrie 100 übereinstimmt. Ferner kann die Verifizierung weiter dadurch verbessert werden, dass eine bestimmte Information, die in dem Beugungselement gespeichert ist, ausgewertet wird und beispielsweise mit einer Vorgabe vergleichen wird. Im dargestellten Beispiel ist beispielsweise der Buchstabe "B" in der Beugungsabbildung 160 zu erkennen.

Die Beugungsstruktur 101, für welche das Beugungsbild "B" bei einer Verifikation unter der Beugungsgeometrie 100 erfasst wird, ist als Volumenreflexionshologramm ausgebildet. Volumenreflexionshologramme zeichnen sich dadurch aus, dass diese eine hohe Winkelselektivität hinsichtlich der Einfallsrichtung des zur Rekonstruktion verwendeten Lichts aufweisen und darüber hinaus eine hohe Wellenlängenselektivität hinsichtlich des gebeugten Lichts besteht. Das Beugungsbild 160 zeigt beispielsweise bei einer Ausbildung als Reflexionsvolumenhologramm den Buchstaben "B" in grüner Farbe, welches gleichbedeutend damit ist, dass Licht grüner Wellenlänge von der als Volumenreflexionshologramm ausgebildeten Beugungsstruktur des Beugungselements 20 gebeugt wird.

Da die Beugungsstruktur 101 des Beugungselements 20, die der einen Beugungsgeometrie 100 zugeordnet ist, in der Regel auch Licht, welches unter anderen Richtungen, die keine Einfallrichtungen der Beugungsgeometrie 100 sind, auf das Beugungselement einfällt, beeinflusst, ist es vorteilhaft, um diese eine Beugungsstruktur "zu verbergen", in das Beugungselement 20 eine zusätzliche Beugungsstruktur 401 zu integrieren. Sind die Beugungsstrukturen 101 und die zusätzliche Beugungsstruktur 401 jeweils als Volumenreflexionshologramme ausgebildet, so können diese beispielsweise in einander überlagerten transparenten Fotopolymerschichten gespeichert sein, die nacheinander jeweils einzeln belichtet sind. Die zusätzliche Beugungsstruktur 401 weist eine zugeordnete Beugungsgeometrie 400 auf, die durch eine zusätzliche Soll-Belichtungsrichtung 410 sowie eine zusätzliche Soll-Erfassungsrichtung 415 gekennzeichnet ist. Ein zusätzliches Beugungsbild 460, welches bei einer Realisierung der zusätzlichen Beugungsgeometrie 400 erfassbar ist, zeigt in der dargestellten Ausführungsform beispielsweise die Buchstaben A, C und D mit einer Lücke zwischen den Buchstaben A und C. Bei einer Ausführungsform ist die zusätzliche Beugungsstruktur 401 mit derselben Wellenlänge als Volumenreflexionshologramm ausgebildet, sodass die Buchstaben in dem zusätzlichen Beugungsbild 460 eine grüne Farbe aufweisen. Alternativ kann jedoch die mittels der Buchstaben A, C und D angedeutete Information auch in einer anderen Wellenlänge oder mit mehreren Wellenlängen in das Volumentransmissionshologramm der zusätzlichen Beugungsstruktur gespeichert sein, sodass die Buchstaben beispielsweise eine rote Farbe aufweisen oder auch verschiedene Farben aufweisen.

Bei der dargestellten Ausführungsform ergänzen sich die Informationen der zusätzlichen Beugungsstruktur 401, die in dem zusätzlichen Beugungsbild 460 erkennbar ist, und die Information des Beugungsbilds 160. Das zusätzliche Beugungsbild 460 wird beispielsweise bei einer Beleuchtung mit Weißlicht senkrecht auf das Sicherheitsdokument unter einem Erfassungswinkel von 45 Grad gegen die Oberflächennormale 30 des Sicherheitsdokuments 1 von einer Kamera erfasst oder von einem menschlichen Betrachter erfasst. Die mittels des Mobiltelefon 200 unter der einen Beugungsgeometrie 100 erfasste Information des Beugungsbilds 160, der Großbuchstabe "B", ergänzt somit die Information des zusätzlichen Beugungsbilds 460 zu einer Gesamtinformation "ABCD".

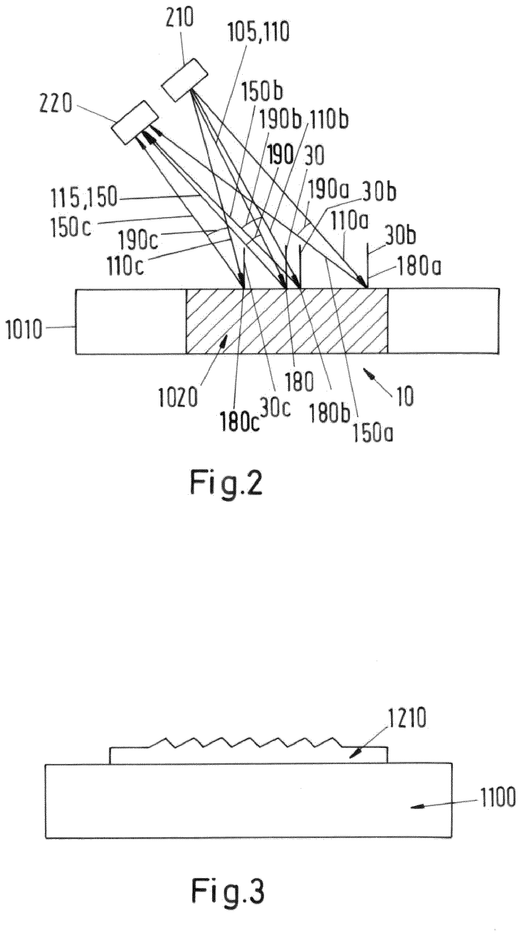

In Fig. 2 ist eine schematische Schnittansicht durch ein Sicherheitselement 10 dargestellt. Das Sicherheitselement umfasst beispielsweise eine Fotopolymerschicht 1010, in die ein Volumenreflexionshologramm 1020 als Beugungsstruktur belichtet ist. Von einer als LED ausgebildeten Beleuchtungseinrichtung 210 fällt an unterschiedlichen Auftrefforten 180, 180a, 180b, 180c Licht entlang der Einfallsrichtung 110a, 11 0b, 110c auf die als Volumenreflexionshologramm ausgebildete Beugungsstruktur 101. Von den Auftrefforten 180, 180a-180c wird gebeugtes Licht zu einer Kamera 220 zurückgeworfen. Diese Richtungen des zur Kamera zurückgebeugten Lichts stellen die Beugungsrichtungen 150, 150a-150c dar. Obwohl die Einfallrichtungen 110, 110a-110c gegenüber den Oberflächennormalen 30, 30a, 30b, 30c an den entsprechenden Auftrefforten 180, 180a-180c unterschiedlich sind, schließen die Einfallrichtungen 110, 110a-110c und die entsprechenden Beugungsrichtungen 150, 150a-150c an den jeweiligen Auftrefforten 180, 180a-180cjeweils einen spitzen Winkel 190, 190a-190c ein. Der Betrag dieser Winkel 190, 190a-190c ist betragsmäßig beschränkt, beispielsweise auf einen Wert im Bereich zwischen 0 Grad und 5 Grad, bevorzugt im Bereich zwischen 0 Grad und 2 Grad oder 0 Grad und 3 Grad.

Die als LED ausgebildete Lichtquelle 130 und die Kamera 220 sind in Fig. 2 in einer Ebene 260 angeordnet. Die Belichtungsrichtung, die mit der Soll-Belichtungsrichtung 105 zusammenfällt, weist von der Mitte 135 der verwendeten örtlich begrenzten Lichtquelle 130 zu einer Mitte 25 des Beugungselements 20. Eine Erfassungsrichtung, die mit der Soll- Erfassungsrichtung 115 zusammenfällt, weist von dieser Mitte 25 des Beugungselements 20 zu der Kamera 220. Somit gibt es zu einer Belichtungsrichtung 105 eine Vielzahl leicht unterschiedlicher Einfallrichtungen 110a-110c und entsprechend zu einer Erfassungsrichtung 115 eine Vielzahl von leicht unterschiedlichen Beugungsrichtungen 150a-150c. Am Auftreffort 180, 180a-180c wird jedoch zwischen den jeweiligen Einfallrichtungen, und somit auch zwischen der Soll-Belichtungsrichtung 105 und der Soll-Erfassungsrichtung 115, jeweils ein spitzer Winkel 190 eingeschlossen, der kleiner als ein vorgegebener Betrag ist.

In Fig. 3 ist schematisch ein nicht beanspruchtes Sicherheitselement gezeigt, welches ein eine Materialschicht 1100 sowie einen darauf beispielsweise als Patch aufgebrachten Dünnschichtfilm umfasst, in den eine Oberflächenreliefstruktur, beispielsweise in Form eines Littrow-Gitters 1210, eingeprägt ist. Auch eine solche Struktur beugt einfallendes Licht bei entsprechender Ausgestaltung am Auftreffort jeweils unter einem spitzen Winkel zurück.

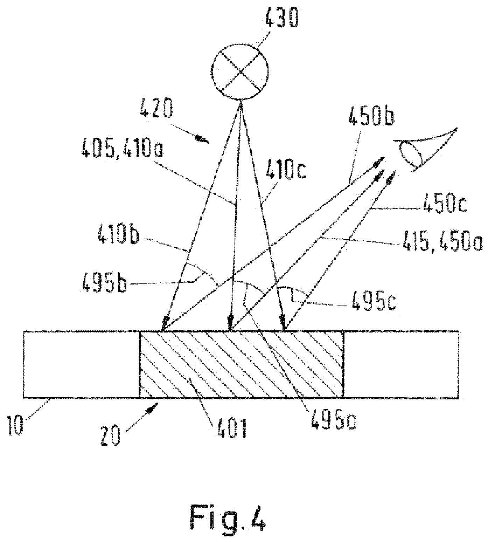

In Fig. 4 ist eine schematische Schnittansicht eines Sicherheitselements 10 schematisch dargestellt, bei der in das Beugungselement 20 eine zusätzliche Beugungsstruktur 401 ausgebildet ist. Die zusätzliche Beugungsstruktur 401 ist ausgebildet, um eine Beugung unter einer zusätzlichen Beugungsgeometrie 400 zu zeigen. Mit einer Beleuchtungsquelle 430, welche eine Lampe oder die Sonne sein kann, wird Licht 420, hier beispielsweise unter einer zusätzlichen Soll-Belichtungsrichtung 405 senkrecht zum Beugungselement 20, eingestrahlt. Dieses wird von einem Betrachter, beispielsweise einem Menschen mit dessen Augen unter einer zusätzlichen Soll-Erfassungsrichtung 415, welche z. B. 45 Grad gegen die Oberflächennormale 30 des Beugungselements 20 geneigt ist, erfasst. Die einzelnen Einfallrichtungen 410a bis 410c und die zugehörigen Beugungsrichtungen 450a bis 450c schließen jeweils einen Beugungswinkel 495a bis 495c ein, welche alle deutlich größer als ein spitzer Winkel sind, unter dem man beispielsweise mit einer Mobilfunkkamera bei eingeschaltetem Blitz eine Beugungsstruktur verifizieren kann. Im dargestellten Beispiel sind die eingeschlossenen Winkel 195a bis 195c alle in der Größenordnung von 45 Grad +/- 5 Grad.

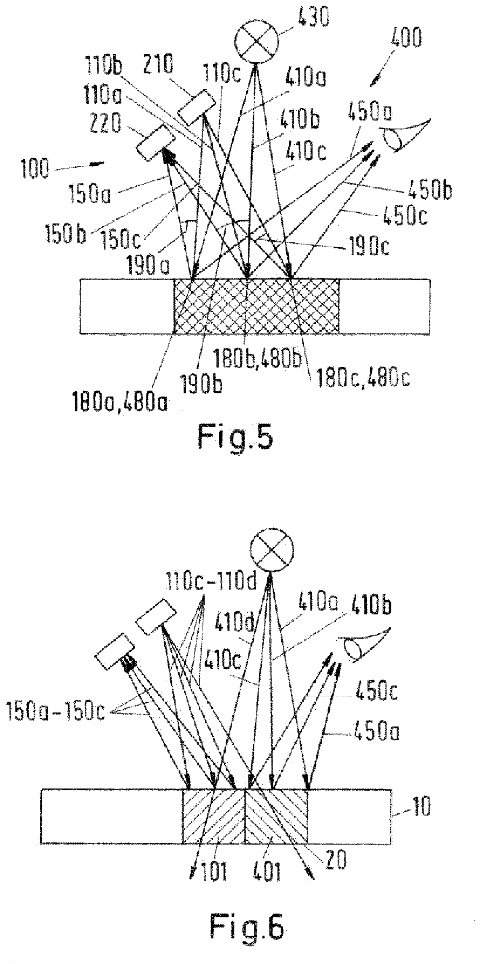

In Fig. 5 ist dann die zeitgleiche Verifikation der einen Beugungsstruktur 101 und der zusätzlichen Beugungsstruktur 401 dargestellt. Bei dieser Ausführungsform sind die eine Beugungsstruktur 101, wie in Fig. 2 schematisch dargestellt, und die zusätzliche Beugungsstruktur 401, wie schematisch in Fig. 4 dargestellt, in dem Beugungselement flächig überlagert ausgebildet. Gleiche technische Merkmale sind in allen Figuren mit denselben Bezugszeichen versehen. Das Sicherheitselement 10 und das Beugungselement 20 weisen somit die eine Beugungsstruktur und die zusätzliche Beugungsstruktur 401 auf, die in demselben Material beispielsweise beide als Volumenreflexionshologramme ausgebildet sind.

In Fig. 6 ist eine ähnliche Ausführungsform eines Sicherheitselements 10 mit einem Beugungselement 20 gezeigt, bei dem die eine Beugungsstruktur 101 benachbart zu und nicht überlappend mit der zusätzlichen Beugungsstruktur 401 ausgebildet ist. Zu erkennen ist, dass Licht 420 der Lampe oder Sonne durch die eine Beugungsstruktur 101 ungehindert hindurch tritt, da die Einfallrichtung dieses Lichts 420 nicht zu der Beugungsgeometrie 100 passt, und somit nicht in der Lage ist, an der einen Beugungsstruktur 101 gebeugt zu werden.

Analog trifft das Licht 120 der Lichtquelle 130, beispielsweise eines Mobilfunktelefonblitzes, unter einem Winkel auf die zusätzliche Beugungsstruktur 401, unter der diese das Licht nicht beugt, so dass dieses Licht 120 die zusätzliche Beugungsstruktur 401 ungehindert passieren kann.

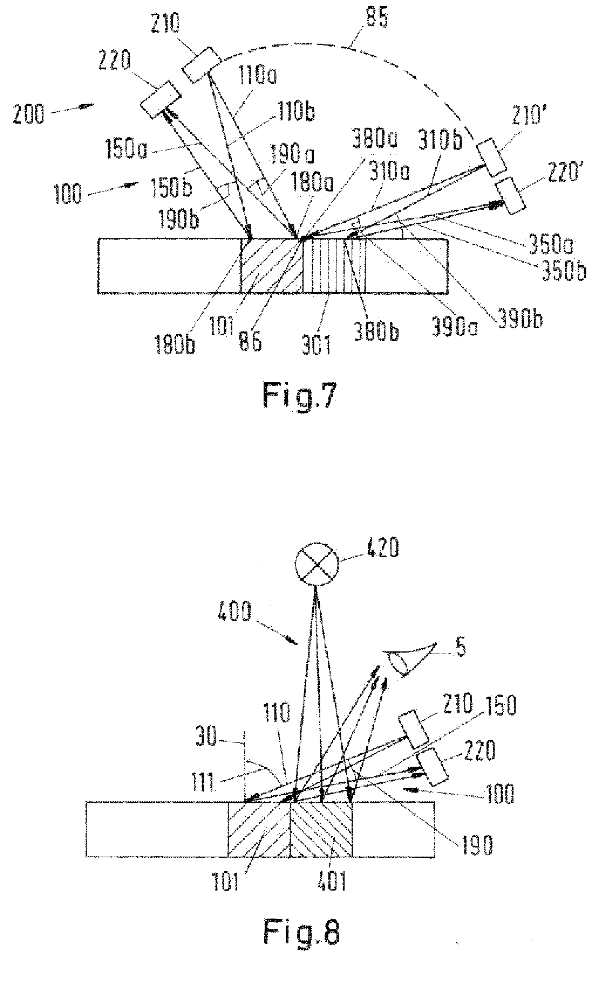

In Fig. 7 ist eine Ausführungsform gezeigt, bei der benachbart zueinander die eine Beugungsstruktur 101 und eine weitere Beugungsstruktur 301 ausgebildet sind. Die weitere Beugungsstruktur 301 beugt einfallendes Licht 320 gemäß der weiteren Beugungsgeometrie 300 unter einem spitzen Winkel 390, der genauso wie der spitze Winkel 190 jeweils kleiner als ein vorgegebener Winkel ist. Dieser vorgegebene Winkel beträgt vorzugsweise 10 Grad, bevorzugter 5 Grad, noch bevorzugter 3 Grad. Dieses Sicherheitselement 10 mit der Beugungsstruktur 20 kann beispielsweise dadurch verifiziert werden, dass ein Mobiltelefon 200 relativ zu dem Sicherheitselement 10 auf einem Kreisbogen 85 geschwenkt wird, dessen Mittelpunkt 86 beispielsweise in der Ebene des Sicherheitselements 10 liegt. Unter zwei Erfassungsrichtungen, die in Fig. 7 dargestellt sind, werden Beugungsbilder erfasst. Unter der einen Soll-Erfassungsrichtung 115 wird das eine Beugungsbild 160 und unter der weiteren Soll-Erfassungsrichtung 315 das weitere Beugungsbild 360 erfasst. Unter anderen Erfassungsrichtungen wird bei der Ausführungsform keine Beugung beobachtet.

Es versteht sich, dass Ausführungsformen möglich sind, bei denen eine Vielzahl weiterer Beugungsstrukturen für eine spitzwinklige Beugung ausgebildet sind, die unter abweichenden Soll-Erfassungsrichtungen, beispielsweise mittels einer Kamera und einer Beleuchtungseinrichtung eines Mobiltelefons erfassbar sind.

Fig. 8 zeigt eine Ausführungsform ähnlich zu der nach Fig. 6, bei der jedoch die eine Beugungsstruktur 101 so ausgebildet ist, dass die Soll-Belichtungsrichtung 105 der Beugungsgeometrie 100 einen großen Belichtungswinkel 111 gegenüber der Oberflächennormale 30 des Beugungselements 20 aufweist, unter der die eine Beugungsstruktur beugt. Vorzugsweise ist der Belichtungswinkel 111 der Beugungsgeometrie 100 hierbei jeweils größer als 50 Grad, bei anderen bevorzugten Ausführungsformen größer 70 Grad oder gar 75 Grad. Unter einem solch streifenden Einfall werden beugende Sicherheitsmerkmale, die reflektierend ausgebildet sind, von einem Betrachter nicht erwartet. Dies gilt umso mehr, als die zusätzliche Beugungsgeometrie 400 existiert, unter der die zusätzliche Beugungsstruktur 401 auch für einen menschlichen Betrachter 5 verifizierbar ist.

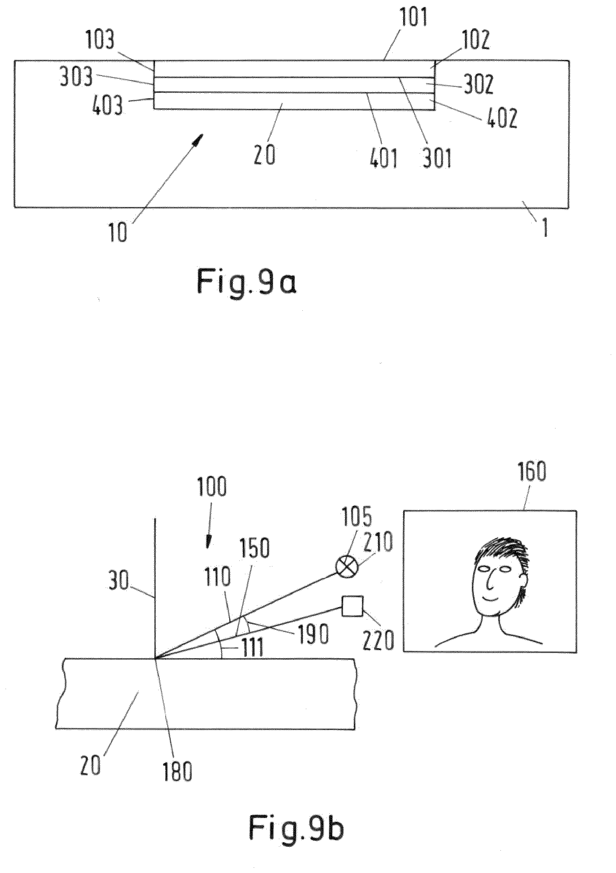

In Fig. 9a ist eine schematische Schnittansicht durch ein Sicherheitsdokument mit einem als Beugungselement ausgebildeten Sicherheitselement gezeigt. In Fig. 9b bis 9e sind unterschiedliche Geometrien für eine Beleuchtung und Erfassung sowie ggf. zugehörige Beugungsabbildungen schematisch dargestellt.

Nicht explizit erwähnte Bezugszeichen kennzeichnen dieselben Merkmale wie in den übrigen Figuren dieser Beschreibung.

In Fig. 9a ist ein Sicherheitsdokument 1 schematisch dargestellt. Das Sicherheitsdokument 1 ist als Laminationskörper aus mehreren aufeinander laminierten Schichten, insbesondere Kunststoffschichten, beispielsweise aus Polycarbonat, Polyethylen, Terephthalat oder anderen gebräuchlichen Kunststoffen hergestellt. Die einzelnen Schichten sind hier aus Gründen der Vereinfachung nicht dargestellt. Das Sicherheitselement 10 umfasst drei aufeinander laminierte belichtete Fotopolymerschichten 103, 303 403. Die eine Fotopolymerschicht 103 umfasst die eine Beugungsstruktur 101, die weitere Fotopolymerschicht 303 umfasst eine weitere Beugungsstruktur 301 und die dritte zusätzliche Fotopolymerschicht 403 umfasst eine zusätzliche Beugungsstruktur 401. Die Beugungsstrukturen 101, 301, 401 sind beispielsweise als Volumenreflexionshologramme 102, 302, 402 in die Fotopolymerschichten 103,303, 403 belichtet. Bei einer Ausführungsform sind die Informationen in die Volumenreflexionshologramme alle mit derselben Wellenlänge belichtet. Bei anderen Ausführungsformen können die verschiedenen Beugungsstrukturen 101, 301, 401 Volumenreflexionshologramme sein, die mit unterschiedlichen Wellenlängen hergestellt sind.

In Fig. 9b ist eine Beugungsgeometrie 100 schematisch dargestellt, ähnlich zu der in Fig. 1 gezeigten Beugungsgeometrie 100. Als Beugungsbild 160 ist beispielsweise ein monochromatisch ausgebildetes dreidimensionales Portrait einer Person dargestellt, der das Sicherheitsdokument 1 nach Fig. 9a zugeordnet ist. Das Beugungsbild 160 mit dem monochromatischen dreidimensionalen Portrait ist beispielsweise mit einem Mobiltelefon unter Verwendung der integrierten Beleuchtungseinrichtung erfassbar. Die Soll-Belichtungsrichtung 105 des Lichts weist einen Auftreffwinkel 111 von beispielsweise 75 Grad gegenüber der Oberflächennormale 30 des Beugungselements 20 auf. Der zwischen der Soll-Belichtungsrichtung 105 und der Soll-Erfassungsrichtung 115 eingeschlossene Winkel 190 ist für alle Auftrefforte 180 beispielsweise jeweils kleiner als 3 Grad.

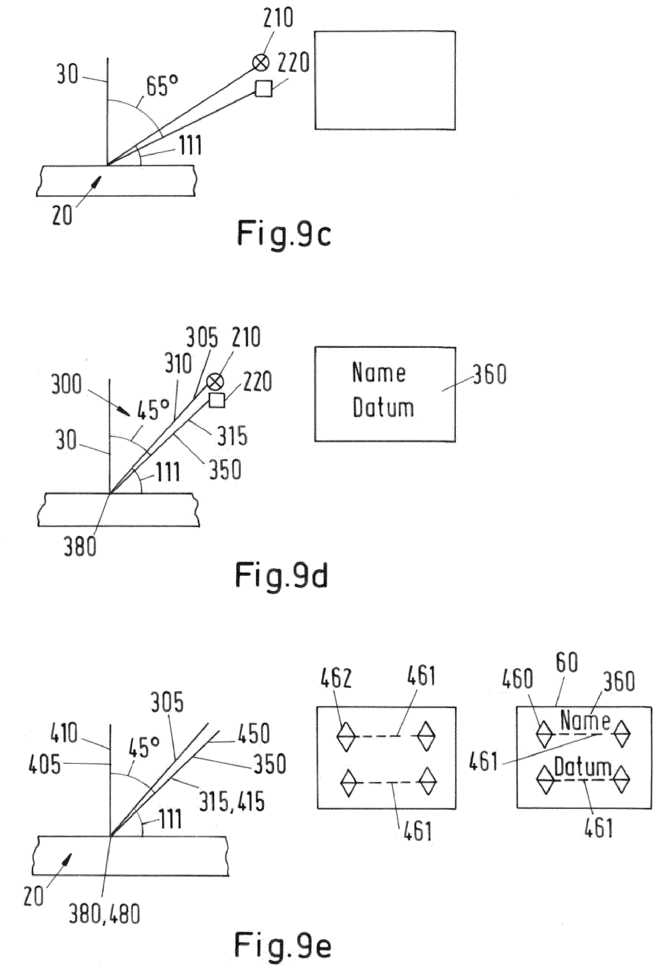

In Fig. 9c ist eine Geometrie für die Beleuchtung und Erfassung gezeigt, bei der die Belichtungsrichtung unter einem Winkel von 65 Grad auf das Beugungselement trifft. Unter dieser Belichtungsrichtung findet keine Beugung des Lichts weder an der Beugungsstruktur 101, der weiteren Beugungsstruktur 301 noch an der zusätzlichen Beugungsstruktur 401, die in dem Volumentransmissionshologramm 102, dem weiteren Volumentransmissionshologramm 302 bzw. dem zusätzlichen Volumentransmissionshologramm 402 nach Fig. 9a ausgebildet sind, statt. Folglich ist kein Beugungsbild zu erfassen.

Wird das Mobiltelefon, mit dem die unter spitzem Winkel beugenden Beugungsstrukturen verifiziert werden können, weiter verschwenkt, so entsteht die in Fig. 9d dargestellte Situation mit der weiteren Beugungsgeometrie 300, bei der beispielsweise die Erfassungsrichtung 45 Grad gegenüber der Oberflächennormale 30 des Beugungselements 20 ausgerichtet ist und mit der Soll-Erfassungsrichtung 315 der weiteren Beugungsgeometrie zusammenfällt,. Unter einer leicht abweichenden Soll-Belichtungsrichtung 305, die um beispielsweise weniger als 3 Grad von der Soll-Erfassungsrichtung 315 abweicht, fällt Licht der Beleuchtungseinrichtung 210 auf das Beugungselement 20. Wird das Sicherheitsdokument 1 in dieser Beugungsgeometrie 300 mit dem Mobiltelefon verifiziert, so sind unter dieser weiteren Beugungsgeometrie 300 beispielsweise ein Name, ein Geburtsdatum und andere persönliche Daten der Person sichtbar, der das Sicherheitsdokument 1 zugeordnet ist.

In Fig. 9e ist eine zusätzliche Beugungsgeometrie 400 gezeigt, bei der eine Einstrahlung von Licht parallel zur Oberflächennormale 30 auf das Sicherheitsdokument erfolgt und eine Erfassung des Sicherheitsdokuments unter 45 Grad bezogen auf die Oberflächennormale 30 erfolgt. Die Soll-Erfassungsrichtungen 415, 315 der zusätzlichen Beugungsgeometrie 400 und der weiteren Beugungsgeometrie 300 fallen bei dieser Ausführungsform zusammen. Wird nur Licht parallel zur Oberflächennormale auf das Sicherheitsdokument 1 eingestrahlt, so ist das Beugungsbild 460 zu erkennen, welches eine dreidimensionale Darstellung von in einem Raster angeordneten doppelpyramidenförmigen glasförmigen Gegenständen zeigt. Bei einer leichten Änderung der Erfassungsrichtung ändert sich das Beugungsbild 460 leicht. Hierdurch wird erreicht, dass bei dieser parallel zur Oberflächennormale erfolgenden Beleuchtung Beugungseffekte der einen Beugungsstruktur 101 und der weiteren Beugungsstruktur 301 für einen Betrachter quasi nicht wahrnehmbar sind. Während die zusätzliche Beugungsstruktur 401 für eine Verifikation mit dem menschlichen Auge geeignet ist, sind die Beugungsstruktur 101 und die weitere Beugungsstruktur 301 für eine Verifikation, beispielsweise über ein Mobiltelefon, vorgesehen. Erfasst man jedoch eine Abbildung, während das Sicherheitsdokument parallel zur Oberflächennormale beleuchtet wird, unter der Erfassungsrichtung von 45 Grad gemessen gegen die Oberflächennormale 30 des Sicherheitsdokuments 1, so erfasst man eine Abbildung 60, die das Beugungsbild 460, d.h. die in einem Raster angeordneten doppelpyramidenförmigen Gegenstände, zeigt. Schaltet man nun zusätzlich bei der Abbildungserfassung die Beleuchtungseinrichtung des Mobiltelefons ein, so ist auch die weitere Beugungsgeometrie 300 erfüllt, sodass überlagert, auch das weitere Beugungsbild 360 von der Kamera erfasst wird. Bei der dargestellten Ausführungsform sind die persönlichen Informationen in Zeilen angeordnet, die mit Verbindungslinien 461 der in dem zusätzlichen Beugungsbild dargestellten oktaederförmigen Objekte 462 zusammenfallen. Somit ergänzen sich die Informationen des zusätzlichen Beugungsbilds 460 und des weiteren Beugungsbilds 360 zu einer Gesamtinformation. Ist beispielsweise die weitere Beugungsstruktur 301 gefälscht, so weicht beispielsweise die Zeile, in der die Informationen wiedergegeben sind, von der Position der Verbindungslinie 461 ab.

Bei anderen Ausführungsformen können andere Informationen, ähnlich wie bei der Ausführungsform nach Fig. 1, in den verschiedenen Beugungsbildern enthalten sein, die sich dann beispielsweise in Form von alphanumerischen Zeichen zu Wörtern oder Zahlen ergänzen.

Für eine Verifikation ist es daher vorgesehen, unter einer Beugungsgeometrie, welche durch die Soll-Belichtungsrichtung und die Soll-Erfassungsrichtung festgelegt ist, eine Abbildung eines Sicherheitsdokuments bzw. des darin enthaltenen Sicherheitselements bei gleichzeitiger Verwendung der benachbart zu der Erfassungseinrichtung angeordneten Beleuchtungseinrichtung zu erfassen, sodass eine spitzwinklige beugende Reflexion als ein erfasstes Beugungsbild zur Verifikation herangezogen werden kann, sofern dieses aufgefunden wird. Um dieses aufzufinden, kann die Beugungsgeometrie verändert werden, indem die Belichtungsrichtung und zusätzlich gegebenenfalls die Erfassungsrichtung relativ zu dem Sicherheitsdokument verändert werden. Beispielsweise kann die Erfassungsrichtung unter Beibehaltung der Belichtungsrichtung verändert werden, indem ein Mobiltelefon um die Belichtungsrichtung als Drehachse rotiert wird. Während das Mobiltelefon beispielsweise schrittweise oder kontinuierlich relativ zu dem Sicherheitsdokument in unterschiedlichen Beugungsgeometrien positioniert wird, werden kontinuierlich oder in zeitlichen Abständen Abbildungen erfasst und auf das Vorhandensein eines Beugungsbilds oder verschiedener Beugungsbilder ausgewertet. Bei der Ausführungsform nach Fig. 9a bis 9e wird beispielweise zuerst das Portrait der Person, anschließend kein Beugungsbild und wieder danach die persönlichen Informationen erfasst, während das Mobiltelefon von der einen Geometrie über die in Fig. 5c dargestellte Geometrie zu der weiteren Beugungsgeometrie nach Fig. 9d bewegt wird.

Ein entsprechendes Computerprogrammprodukt ist so ausgebildet, dass es diese Erfassungssequenz steuert. Werden nacheinander ein Beugungsbild, kein Beugungsbild und ein abweichendes Beugungsbild während des Verschwenkens des Mobiltelefons erfasst, wird das Dokument als echt verifiziert.

Eine alternative Verifikationsmethode sieht vor, dass das Mobiltelefon zunächst kontinuierlich Abbildungen erfasst, während das Sicherheitsdokument mit weißem Licht parallel zur Oberflächennormale beleuchtet wird, bis von der Kamera eine Beugungsabbildung erfasst wird, die beispielsweise Erkennungsmarken aufweist, die ein automatisches Figurenerkennungsprogramm ähnlich wie bei einem QR-Code erkennt. Das Mobiltelefon zeigt entweder in der Anzeige optisch an, dass es die zusätzliche Beugungsabbildung korrekt erfasst und/oder gibt ein akustisches Signal aus. Anschließend wird zusätzlich die Beleuchtungseinrichtung des Mobiltelefons aktiviert und eine weitere Abbildung erfasst. Es wird dann eine Erkennung ausgeführt, die prüft, ob zusätzlich zu dem zusätzlichen Beugungsbild auch das weitere Beugungsbild der weiteren Beugungsstruktur erkennbar ist. In einer Weiterbildung werden die Informationen des zusätzlichen Beugungsbilds und des weiteren überlagerten Beugungsbilds bei Hinzuschaltung der Beleuchtungseinrichtung daraufhin geprüft, ob diese sich korrekt ergänzen.

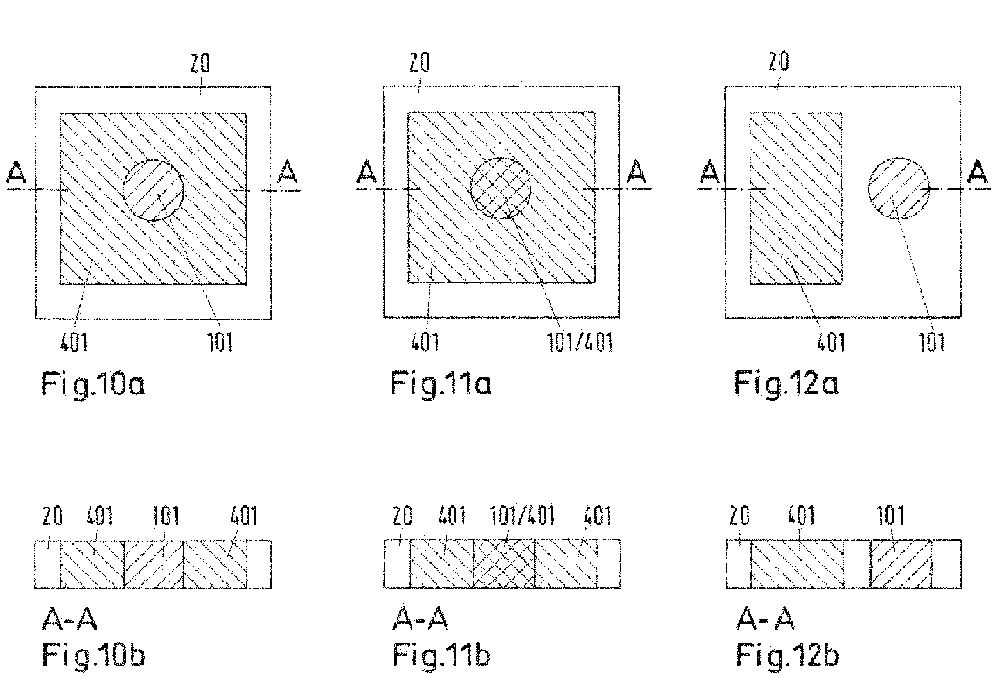

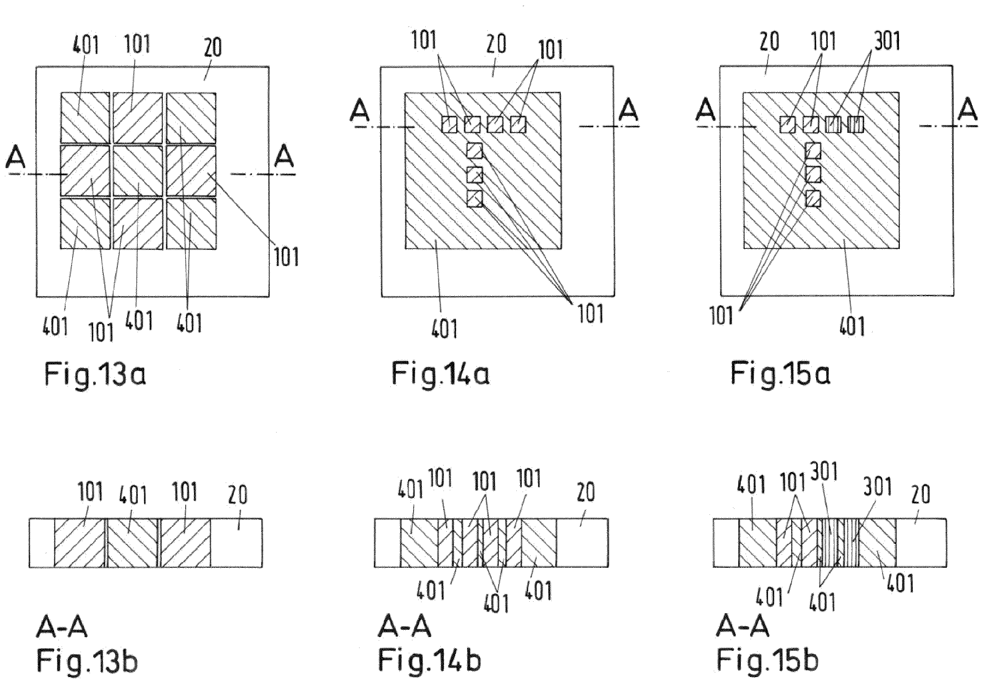

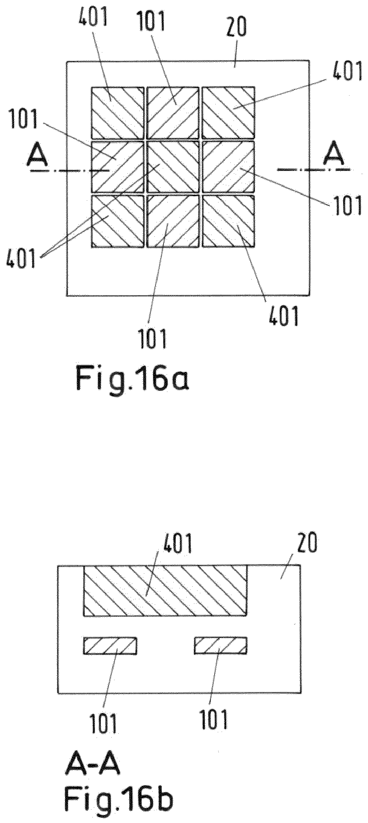

Die Figuren 10a bis 16a stellen Draufsichten auf Beugungselemente mit zwei oder mehr Beugungsstrukturen dar. Die Figuren 10 b bis 16b zeigen die zugehörigen Querschnitte durch die Beugungselemente dar. Von links oben nach rechts unten verlaufende Schraffuren (\) stellen "herkömmliche" zusätzliche Beugungsstrukturen 401 dar, welche eine Beugungsgeometrie aufweisen, bei der Soll-Belichtungsrichtung und Soll-Erfassungsrichtung einen Winkel einschließen, dessen Betrag größer als ein Vielfaches eines vorgegebenes Werts für einen spitzen Winkel ist. Andere Schraffuren stellen jeweils eine Beugungsstruktur 101 oder weitere Beugungsstruktur 301 dar, welche Licht unter einer Beugungsgeometrie beugen, deren Soll-Belichtungsrichtung und Soll-Erfassungsrichtung einen spitzen Winkel einschließen, dessen Betrag kleiner als der vorgegebene Wert für den spitzen Winkel ist. Nicht schraffierte Bereiche beugen kein Licht.

Es ergibt sich für den Fachmann, dass Ausführungsformen möglich sind, bei denen eine Vielzahl weiterer unter spitzem Winkel beugender Beugungsstrukturen in dem Beugungselement enthalten ist.

### Bezugszeichenliste

- 1: Sicherheitsdokument
- 5: menschlicher Betrachter
- 10: Sicherheitselement
- 20: Beugungselement
- 25: Mitte
- 30: Oberflächennormale
- 35: Mitte
- 60: Abbildung
- 85: Kreisbogen
- 86: Mittelpunkt
- 100: Beugungsgeometrie
- 101: Beugungsstruktur
- 105: Soll-Belichtungsrichtung
- 110a bis 110 c: Einfallrichtung
- 111: Belichtungswinkel
- 112: Erfassungswinkel
- 115: Soll-Erfassungsrichtung
- 120: Licht
- 130: Lichtquelle
- 135: Mitte
- 150a bis 150c: Beugungsrichtung
- 160: Beugungsbild
- 170: Erfassungsrichtung
- 180, 180a bis 180c: Auftreffort
- 190, 190a -190c: spitzer Winkel
- 195a bis 195c: eingeschlossenen Winkel
- 200: Mobiltelefon
- 210, 210': Beleuchtungseinrichtung
- 220, 220': Kamera
- 230: Rückseite
- 240: Anzeige
- 250: Vorderseite
- 260: Ebene
- 300: Beugungsgeometrie
- 301: weitere Beugungsstruktur
- 305: weitere Belichtungsrichtung
- 310a, 310b: weitere Einfallrichtung
- 311: weiterer Auftreffwinkel
- 315: weitere Erfassungsrichtung
- 320: Licht
- 380, 380a, 380b: weiterer Auftreffort
- 390, 390a, 390b: weiterer spitzer Winkel
- 400: zusätzliche Beugungsgeometrie
- 401: zusätzliche Beugungsstruktur
- 405: zusätzliche Soll-Belichtungsrichtung
- 410a bis 410c: zusätzliche Einfallrichtung
- 415: zusätzliche Soll-Erfassungrichtung
- 420: Licht
- 430: Beleuchtungsquelle
- 450a bis 450c: zusätzliche Beugungsrichtung
- 460: zusätzliches Beugungsbild
- 461: Verbindungslinien
- 462: doppelpyramidenförmigen Objekte
- 480, 480a bis 480c: zusätzlicher Auftreffort
- 495, 495a bis 495c: Beugungswinkel
- 1010: Fotopolymerschicht
- 1020: Volumenreflexionshologramm
- 1100: Materialschicht
- 1200: Dünnschichtfilm
- 1210: Littrow-Gitter

## Patentansprüche

1. Sicherheitselement (20) umfassend eine in Reflexion beugendes Beugungselement (20), wobei das Beugungselement (20) eine Beugungsstruktur (101) umfasst, für welche eine Beugungsgeometrie (100), die durch eine Soll-Belichtungsrichtung (105) und eine Soll-Erfassungsrichtung (105) relativ zu der Beugungsstruktur (101) definiert ist, existiert, bei der eine Soll-Belichtungsrichtung (105) des für die Beugung vorgesehenen Lichts (120) mit einer Soll-Erfassungsrichtung (115), unter der das reflektierend gebeugte Licht erfassbar ist, an einem Auftreffort (180) auf oder in dem Beugungselement (20) einen spitzen Winkel (190) einschließen, wobei die Soll-Belichtungsrichtung (105) die Richtung relativ zu der Beugungsstruktur (101) bezeichnet, entlang derer Licht auf die Beugungsstruktur (101) auftreffen muss, damit dieses auftreffende Licht von der Beugungsstruktur als das reflektierend gebeugte Licht gebeugt wird, wobei die Richtungen der Soll-Belichtungsrichtung (105) und Soll-Erfassungsrichtung (115) bezüglich des Beugungselements (20) und der darin verkörperten Beugungsstruktur (101) mittels des Auftreffortes auf oder in der Beugungsstruktur, auf die die Soll-Belichtungsrichtung (105) weist und von der die Soll-Erfassungsrichtung (115) ausgeht, und jeweils zwei Winkeln in einem mit der Beugungsstruktur (101) verknüpften Koordinatensystem angebbar sind, dessen Ursprung mit dem Auftreffort (180) zusammenfällt, wobei
der eine spitze Winkel (190) kleiner 10 Grad oder bevorzugter kleiner 5 Grad oder noch bevorzugter kleiner 3 Grad ist,
wobei die Beugungsstrutur als ein Volumenreflexionshologramm ausgebildet ist,
wobei das Beugungselement (20) eine reflektierend beugende zusätzliche Beugungsstruktur (401) aufweist, wobei die zusätzliche Beugungsstruktur (401) eine zusätzliche Beugungsgeometrie (400) aufweist, bei der eine zusätzliche Soll-Belichtungsrichtung (405) des eine Beugung herbeiführenden Lichts (420) und eine zusätzliche Soll-Erfassungsrichtung (415), unter der das zusätzlich reflektierend gebeugte Licht erfassbar ist, am Auftreffort (480) einen Winkel (495) einschließen, der größer als der eine spitze Winkel (190) ist.

2. Sicherheitselement (10) nach Anspruch 1, **dadurch gekennzeichnet, dass** die Beugungsgeometrie (100) von einer Geometrie für eine spiegelnde Reflexion an einer Oberfläche des Beugungselements abweicht.

3. Sicherheitselement (10) nach einem der vorangehenden Ansprüche, **dadurch gekennzeichnet, dass**
dass das Beugungselement (20) eine von der einen Beugungsstruktur (101) verschiedene weitere Beugungsstruktur (301) umfasst, für die eine weitere von der einen Beugungsgeometrie (100) verschiedene Beugungsgeometrie (300) existiert, bei der eine weitere Soll-Belichtungsrichtung (310) des einfallenden Lichts (320) und eine weitere Soll-Erfassungsrichtung (315), unter der das reflektierend gebeugte Licht erfassbar ist, am weiteren Auftreffort (380) einen weiteren spitzen Winkel (390) einschließen.

4. Sicherheitselement nach einem der Ansprüche 1 bis 2, **dadurch gekennzeichnet, dass**
dass das Beugungselement (20) eine Vielzahl von weiteren Beugungsstrukturen (301) umfasst, die von der einen Beugungsstruktur (101) und von den übrigen der Vielzahl von weiteren Beugungsstrukturen (301) verschieden sind, wobei für jede der Vielzahl der weiteren Beugungsstrukturen (301) eine weitere Beugungsgeometrie (300) existiert, bei der eine weitere Soll-Belichtungsrichtung (305) des einfallenden Lichts (320) und eine weitere Soll-Erfassungsrichtung (315), unter der das reflektierend gebeugte Licht erfassbar ist, am Auftreffort (380) einen weiteren spitzen Winkel (395) einschließen, wobei die weitere Beugungsgeometrie (300) jeweils verschieden von der einen Beugungsgeometrie (100) und den übrigen Beugungsgeometrien (300) der übrigen der Vielzahl von weiteren Beugungsstrukturen (301) ist.

5. Sicherheitselement (10) nach einem der Ansprüche 3 oder 4, **dadurch gekennzeichnet, dass**
ein Belichtungswinkel (111) der Soll-Belichtungsrichtung (110) der einen Beugungsgeometrie (100) gemessen gegen die Oberflächennormale (30) am jeweiligen Auftreffort (180) und ein weiterer Belichtungswinkel (311) der weiteren Soll-Belichtungsrichtung (310) an dem jeweiligen Auftreffort (380) sich um einen Winkelbetrag unterscheiden, der größer als ein Betrag des spitzen Winkels (190) der einen Beugungsgeometrie (300) und größer als ein weiterer Betrag des weiteren spitzen Winkels (390) der weiteren Beugungsgeometrie (300) ist.

6. Sicherheitselement (10) nach einem der vorangehenden Ansprüche, **dadurch gekennzeichnet, dass** sich die zusätzliche Beugungsstruktur (401) und/oder die weitere Beugungsstruktur (301) mit der einen Beugungsstruktur (101) flächig überlappen.

7. Sicherheitselement (10) nach einem der vorangehenden Ansprüche, **dadurch gekennzeichnet, dass** die eine Soll-Erfassungsrichtung (115), unter der das unter der einen Soll-Belichtungsrichtung (105) einfallende und an der einen Beugungsstruktur (101) gebeugte Licht erfassbar ist, und die zusätzliche Soll-Erfassungsrichtung (415), unter der das unter der zusätzlichen Soll-Belichtungsrichtung (405) einfallende und an der zusätzlichen Beugungsstruktur (401) gebeugte Licht erfassbar ist, zusammenfallen.

8. Sicherheitsdokument (1) mit einem Sicherheitselement (10) gemäß einem der Ansprüche 1 bis 7.

9. Verfahren zum Herstellen eines Sicherheitselement (1) mit einem Beugungselement (20), wobei in eine Materialschicht eine Beugungsstruktur (101) des Beugungselements (20) belichtet wird, für welche eine Beugungsgeometrie (100), die durch eine Soll-Belichtungsrichtung (105) und eine Soll-Erfassungsrichtung (105) relativ zu der Beugungsstruktur (101) definiert ist, existiert, bei der die Soll-Belichtungsrichtung (105) des für die Beugung vorgesehenen Lichts mit der Soll-Erfassungsrichtung (115), unter der das reflektierend gebeugte Licht erfassbar ist, an einem Auftreffort (180) auf oder in dem Beugungselement (20) einen spitzen Winkel (190) einschließen, wobei die Soll-Belichtungsrichtung (105) die Richtung relativ zu der Beugungsstruktur (101) bezeichnet, entlang derer Licht auf die Beugungsstruktur (101) auftreffen muss, damit dieses auftreffende Licht von der Beugungsstruktur als das gebeugte Licht gebeugt wird, wobei die Richtungen der Soll-Belichtungsrichtung (105) und Soll-Erfassungsrichtung (115) bezüglich des Beugungselements (20) und der darin verkörperten Beugungsstruktur (101) mittels des Auftreffortes auf oder in der Beugungsstruktur, auf die die Soll-Belichtungsrichtung (105) weist und von der die Soll-Erfassungsrichtung (115) ausgeht, und jeweils zwei Winkeln in einem mit der Beugungsstruktur (101) verknüpften Koordinatensystem angebbar sind, dessen Ursprung mit dem Auftreffort (180) zusammenfällt, wobei
der eine spitze Winkel (190) kleiner 10 Grad oder bevorzugter kleiner 5 Grad oder noch bevorzugter kleiner 3 Grad ist,
wobei die Beugungsstrutur als ein Volumenreflexionshologramm ausgebildet wird,
wobei in die eine Materialschicht oder die eine weitere Materialschicht oder eine der Mehrzahl von weiteren Materialschichten oder eine zusätzliche Materialschicht eine zusätzliche reflektierend beugende Beugungsstruktur (401) belichtet wird, wobei die zusätzliche Beugungsstruktur (401) eine zusätzliche Beugungsgeometrie (400) aufweist, bei der eine zusätzliche Soll-Belichtungsrichtung (405) des eine Beugung herbeiführenden Lichts und eine Soll-Erfassungsrichtung (415), unter der das reflektierend gebeugte Licht erfassbar ist, am zusätzlichen Auftreffort 480) einen Winkel (495) einschließen, der größer als der eine spitze Winkel (190) ist, und sofern die zusätzliche Beugungsstruktur (401) in die zusätzliche Materialschicht belichtet wird, die zusätzliche Materialschicht mit der einen Materialschicht zusammengefügt wird.

10. Verfahren nach Anspruch 9, **dadurch gekennzeichnet, dass** in die Materialschicht oder eine weitere Materialschicht eine von der einen Beugungsstruktur (101) verschiedene weitere Beugungsstruktur (301) belichtet wird, für die eine weitere von der einen Beugungsgeometrie (100) verschiedene Beugungsgeometrie (300) existiert, bei der eine weitere Soll-Belichtungsrichtung (305) des einfallenden Lichts und eine weitere Soll-Erfassungsrichtung (315), unter der das reflektierend gebeugte Licht erfassbar ist, am Auftreffort (380) einen weiteren spitzen Winkel (390) einschließen, und sofern die weitere Beugungsstruktur (301) in die weitere Materialschicht geprägt oder belichtetet wird, die eine Materialschicht und die weitere Materialschicht zu einem Laminationsverbund zusammengefügt werden.

11. Verfahren nach Anspruch 9 oder 10, **dadurch gekennzeichnet, dass** in die Materialschicht oder eine weitere Materialschicht oder eine Mehrzahl von weiteren Materialschichten eine Vielzahl von weiteren Beugungsstrukturen (301) geprägt und/oder belichtet werden, die von der einen Beugungsstruktur (101) und von den übrigen der Vielzahl von weiteren Beugungsstrukturen (301) verschieden sind, wobei für jede der Vielzahl der weiteren Beugungsstrukturen (301) eine weitere Beugungsgeometrie (300) existiert, bei der eine weitere Soll-Belichtungsrichtung (305) des einfallenden Lichts und eine weitere Soll-Erfassungsrichtung (315), unter der das reflektierend gebeugte Licht erfassbar ist, am weiteren Auftreffort (380) einen weiteren spitzen Winkel (390) einschließen, wobei die weitere Beugungsgeometrie (300) jeweils verschieden von der einen Beugungsgeometrie (100) und den übrigen Beugungsgeometrien (300) der übrigen der Vielzahl von weiteren Beugungsstrukturen (301) ist, und sofern eine der Vielzahl von weiteren Beugungsstrukturen (301) in die eine weitere Materialschicht oder eine der Mehrzahl der weiteren Materialschichten belichtet oder geprägt ist, die eine Materialschicht und die weitere Materialschicht oder die eine Materialschicht und die Mehrzahl der weiteren Materialschichten zu einem Laminationsverbund zusammengefügt werden.

## Claims

1. Security element (20) comprising a diffraction element (20) diffracting in reflection (20), wherein the diffraction element (20) comprises a diffraction structure (101) for which a diffraction geometry (100) defined by a nominal exposure direction (105) and a nominal detection direction (105) relative to the diffraction structure (101), in which a nominal exposure direction (105) of the light (120) intended for diffraction encloses an acute angle (190) with a nominal detection direction (115), under which the reflectively diffracted light can be detected, at a point of incidence (180) on or in the diffraction element (20), the nominal exposure direction (105) designating the direction relative to the diffraction structure (101) along which the light (120) intended for diffraction can be detected (101) along which light must impinge on the diffraction structure (101) so that this impinging light is diffracted by the diffraction structure as the reflectively diffracted light, the directions of the nominal exposure direction (105) and nominal detection direction (115) with respect to the diffraction element (20) and the diffraction structure (101) embodied therein being determined by means of the impingement location on or in the diffraction structure, to which the nominal exposure direction (105) points and from which the nominal detection direction (115) emanates, and in each case two angles can be indicated in a coordinate system linked to the diffraction structure (101), the origin of which coincides with the point of incidence (180), wherein the one acute angle (190) is less than 10 degrees or preferably less than 5 degrees or even more preferably less than 3 degrees, wherein the diffraction pattern is formed as a volume reflection hologram, wherein the diffraction element (20) has a reflectively diffracting additional diffraction structure (401), the additional diffraction structure (401) having an additional diffraction geometry (400), in which an additional nominal exposure direction (405) of the light (420) causing diffraction and an additional nominal detection direction (415), under which the additionally reflectively diffracted light can be detected, enclose an angle (495) at the point of incidence (480) which is greater than the one acute angle (190).

2. Security element (10) according to claim 1, **characterized in that** the diffraction geometry (100) deviates from a geometry for a specular reflection at a surface of the diffraction element.

3. Security element (10) according to one of the preceding claims, **characterized in that** in that the diffraction element (20) comprises a further diffraction structure (301) which differs from the one diffraction structure (101) and for which a further diffraction geometry (300) exists which differs from the one diffraction geometry (100) and in which a further nominal exposure direction (310) of the incident light (320) and a further nominal detection direction (315), under which the reflectively diffracted light can be detected, include a further acute angle (390) at the further point of incidence (380).

4. Security element according to one of claims 1 to 2, **characterized in that** the diffraction element (20) comprises a plurality of further diffraction structures (301) which are different from the one diffraction structure (101) and from the rest of the plurality of further diffraction structures (301), wherein for each of the plurality of further diffraction structures (301) there exists a further diffraction geometry (300) in which a further nominal exposure direction (305) of the incident light (320) and a further nominal detection direction (315), under which the reflectively diffracted light can be detected, include a further acute angle (395) at the point of incidence (380), the further diffraction geometry (300) is in each case different from the one diffraction geometry (100) and the other diffraction geometries (300) of the remainder of the plurality of further diffraction structures (301).

5. Security element (10) according to one of claims 3 or 4, **characterized in that** an exposure angle (111) of the nominal exposure direction (110) of the one diffraction geometry (100) measured against the surface normal (30) at the respective point of incidence (180) and a further exposure angle (311) of the further nominal exposure direction (310) at the respective point of incidence (380) differ by an angular amount which is greater than an amount of the acute angle (190) of the one diffraction geometry (300) and is greater than a further amount of the further acute angle (390) of the further diffraction geometry (300).

6. Safety element (10) according to one of the preceding claims, **characterized in that** the additional diffraction structure (401) and/or the further diffraction structure (301) overlap over a large area with the one diffraction structure (101).

7. Security element (10) according to one of the preceding claims, **characterized in that** the one nominal detection direction (115), under which the light incident under the one nominal exposure direction (105) and diffracted at the one diffraction structure (101) can be detected, and the additional nominal detection direction (415), under which the light incident under the additional nominal exposure direction (405) and diffracted at the additional diffraction structure (401) can be detected, coincide.

8. Security document (1) with a security element (10) according to one of claims 1 to 7.

9. Method for producing a security element (1) having a diffraction element (20), wherein a diffraction structure (101) of the diffraction element (20) is exposed in a material layer, for which diffraction structure (101) a diffraction geometry (100) exists which is defined by a nominal exposure direction (105) and a nominal detection direction (105) relative to the diffraction structure (101), in which the nominal exposure direction (105) of the light intended for diffraction encloses an acute angle (190) with the nominal detection direction (115), under which the reflectively diffracted light can be detected, at a point of incidence (180) on or in the diffraction element (20), the nominal exposure direction (105) designating the direction relative to the diffraction structure (101), along which light must impinge on the diffraction structure (101) so that this impinging light is diffracted by the diffraction structure as the diffracted light, wherein the directions of the nominal exposure direction (105) and nominal detection direction (115) with respect to the diffraction element (20) and the diffraction structure (101) embodied therein by means of the impingement location on or in the diffraction structure to which the nominal exposure direction (105) points and from which the nominal detection direction (115) and in each case two angles in a coordinate system linked to the diffraction structure (101) linked to the diffraction structure (101), the origin of which coincides with the point of incidence (180), wherein the one acute angle (190) is less than 10 degrees or preferably less than 5 degrees or even more preferably less than 3 degrees, wherein the diffraction pattern is formed as a volume reflection hologram, wherein an additional reflectively diffracting diffraction structure (401) is exposed in the one material layer or the one further material layer or one of the plurality of further material layers or an additional material layer, wherein the additional diffraction structure (401) has an additional diffraction geometry (400) in which an additional nominal exposure direction (405) of the light causing diffraction and a nominal detection direction (415) under which the reflectively diffracted light can be detected, at the additional incident location (480) include an angle (495) which is greater than the one acute angle (190), and if the additional diffraction structure (401) is exposed into the additional material layer, the additional material layer is joined to the one material layer.

10. Method according to claim 9, **characterized in that** in the material layer or a further material layer, a further diffraction structure (301) different from the one diffraction structure (101) is exposed, for which a further diffraction geometry (300) different from the one diffraction geometry (100) exists, in which a further nominal exposure direction (305) of the incident light and a further nominal detection direction (315), under which the reflectively diffracted light can be detected, include a further acute angle (390) at the point of incidence (380), and insofar as the further diffraction structure (301) is embossed or exposed in the further material layer, the one material layer and the further diffraction structure (301) include a further acute angle (390) at the point of incidence (380) and insofar as the further diffraction structure (301) is embossed or exposed in the further material layer, the one material layer and the further material layer are joined together to form a lamination composite.

11. Method according to claim 9 or 10, **characterized in that** a plurality of further diffraction structures (301) are embossed and/or exposed in the material layer or a further material layer or a plurality of further material layers, which are separated from the one diffraction structure (101) and from the rest of the plurality of further diffraction structures (301) other of the plurality of further diffraction structures (301) wherein a further diffraction geometry (300) exists for each of the plurality of further diffraction structures (301), in which a further nominal exposure direction (305) of the incident light and a further nominal detection direction (315), under which the reflectively diffracted light can be detected, include a further acute angle (390) at the further point of incidence (380), the further diffraction geometry (300) being in each case different from the one diffraction geometry (100) and the remaining diffraction geometries (300) of the remainder of the plurality of further diffraction structures (301), and if one of the plurality of further diffraction structures (301) is exposed or embossed in the one further material layer or one of the plurality of further material layers, the one material layer and the further material layer or the one material layer and the plurality of further material layers are joined together to form a lamination composite.

## Revendications

1. Elément de sécurité (20) comprenant un élément de diffraction (20) diffractant en réflexion, dans lequel l'élément de diffraction (20) comprend une structure de diffraction (101) pour laquelle il existe une géométrie de diffraction (100) qui est définie par une direction d'exposition cible (105) et une direction de détection cible (105) par rapport à la structure de diffraction (101), chez laquelle une direction d'exposition cible (105) de la lumière (120) prévue pour la diffraction, avec une direction de détection cible (115) sous laquelle la lumière diffractée en réflexion est détectable, forment un angle aigu (190) au niveau d'un site d'incidence (180) sur ou dans l'élément de diffraction (20), où la direction d'exposition cible (105) désigne la direction par rapport à la structure de diffraction (101) le long de laquelle la lumière doit tomber sur la structure de diffraction (101), afin que cette lumière incidente soit diffractée par la structure de diffraction sous forme de lumière diffractée en réflexion, où les sens de la direction d'exposition cible (105) et la direction de détection cible (115) par rapport à l'élément de diffraction (20) et à la structure de diffraction (101) y étant matérialisée, au moyen du site d'incidence sur ou dans la structure de diffraction vers laquelle la direction d'exposition cible (105) est orientée et à partir de laquelle la direction de détection cible (115) émane, et respectivement deux angles peuvent être indiqués dans un système de coordonnées combiné avec la structure de diffraction (101) dont l'origine coïncide avec le site d'incidence (180), dans lequel
l'un des angles aigus (190) est inférieur à 10 degrés, ou de préférence inférieur à 5 degrés, ou plus préférentiellement inférieur à 3 degrés,
dans lequel la structure de diffraction est conçue comme un hologramme de réflexion volumique,
dans lequel l'élément de diffraction (20) présente une structure de diffraction (401) supplémentaire diffractant en réflexion, où la structure de diffraction (401) supplémentaire présente une géométrie de diffraction (400) supplémentaire, chez laquelle une direction d'exposition cible (405) supplémentaire de la lumière (420) provoquant une diffraction et une direction de détection cible (415) supplémentaire, sous laquelle la lumière diffractée en réflexion supplémentaire peut être détectée forment un angle (495) au site d'incidence (480) qui est supérieur à l'angle aigu (190).

2. Elément de sécurité (10) selon la revendication 1, **caractérisé en ce que** la géométrie de diffraction (100) se différentie d'une géométrie pour une réflexion en miroir sur une surface de l'élément de diffraction.

3. Elément de sécurité (10) selon l'une des revendications précédentes, **caractérisé en ce que**
que l'élément de diffraction (20) comprend une autre structure de diffraction (301) différente de la structure de diffraction (101), pour laquelle une autre géométrie de diffraction (300) différente de la géométrie de diffraction (100) existe, chez laquelle une autre direction d'exposition cible (310) de la lumière (320) incidente et une autre direction de détection cible (315) sous laquelle la lumière diffractée en réflexion est détectable forment un autre angle aigu (390) sur l'autre site d'incidence (380).

4. Elément de sécurité (10) selon l'une des revendications 1 à 2, **caractérisé en ce que** que l'élément de diffraction (20) comprend un grand nombre d'autres structures de diffraction (301), qui sont différentes de la structure de diffraction (101) et des autres parmi le grand nombre d'autres structures de diffraction (301), où, pour chacune du grand nombre d'autres structures de diffraction (301), il existe une autre géométrie de diffraction (300), chez laquelle une autre direction d'exposition cible (305) de la lumière (320) incidente et une autre direction de détection cible (315) sous laquelle la lumière diffractée en réflexion peut être détectée, forment un autre angle aigu (395) au niveau du site d'incidence (380), où l'autre géométrie de diffraction (300) est respectivement différente de la géométrie de diffraction (100) et des géométries de diffraction (300) restantes des structures restantes du grand nombre des autres structures de diffraction (301).

5. Elément de sécurité (10) selon l'une des revendications 3 ou 4, **caractérisé en ce que** un angle d'exposition (111) de la direction d'exposition cible (110) de la géométrie de diffraction (100) mesuré par rapport à la normale de surface (30) au site d'incidence (180) respectif et un autre angle d'exposition (311) de l'autre direction d'exposition cible (310) au site d'incidente (380) respectif se différentient d'une contribution angulaire qui est supérieure à une contribution de l'angle aigu (190) de la géométrie de diffraction (300) et est supérieure à une autre contribution de l'autre angle aigu (390) de l'autre géométrie de diffraction (300).

6. Elément de sécurité (10) selon l'une des revendications précédentes, **caractérisé en ce que** la structure de diffraction supplémentaire (401) et/ou l'autre structure de diffraction (301) se superposent à plat avec la structure de diffraction (101).

7. Elément de sécurité (10) selon l'une des revendications précédentes, **caractérisé en ce que** la direction de détection cible (115) sous laquelle la lumière tombant sous la direction d'exposition cible (105) et diffractée sur la structure de diffraction (101) est détectable et la direction de détection cible supplémentaire (415) sous laquelle la lumière tombant sous la direction d'exposition cible supplémentaire (405) et diffractée sur la structure de diffraction supplémentaire (401) est détectable, coïncident.

8. Document de sécurité (1) avec un élément de sécurité (10) selon l'une des revendications 1 à 7.

9. Procédé de fabrication d'un élément de sécurité (1) avec un élément de diffraction (20), dans lequel une structure de diffraction (101) de l'élément de diffraction (20) est exposée dans une couche de matériau, pour laquelle il existe une géométrie de diffraction (100) qui est défini par une direction d'exposition cible (105) et une direction de détection cible (105) par rapport à la structure de diffraction (101), chez laquelle la direction d'exposition cible (105) de la lumière prévue pour la diffraction, avec la direction de détection cible (115) sous laquelle la lumière diffractée en réflexion est détectable, au niveau d'un site d'incidence (180), forment un angle aigu (190) sur ou dans l'élément de diffraction (20), où la direction d'exposition cible (105) désigne la direction par rapport à la structure de diffraction (101) le long de laquelle sa lumière doit tomber sur la structure de diffraction (101) afin que cette lumière incidente soit diffractée par la structure de diffraction sous forme de lumière diffractée, où les sens de la direction d'exposition cible (105) et la direction de détection cible (115), par rapport à l'élément de diffraction (20) et la structure de diffraction (101) y étant matérialisée, au moyen du site d'incidence sur ou dans la structure de diffraction, vers laquelle la direction d'exposition cible (105) est dirigée et à partir de laquelle la direction de détection cible (115) émane, et respectivement deux angles peuvent être indiqués dans un système de coordonnées combiné avec la structure de diffraction (101), dont l'origine coïncide avec le site d'incidence (180), où
l'un des angles aigus (190) est inférieur à 10 degrés ou de préférence, inférieur à 5 degrés ou plus préférentiellement encore inférieur à 3 degrés,
dans lequel la structure de diffraction est représentée sous forme d'un hologramme de réflexion en volume,
dans lequel une structure de diffraction supplémentaire (401) diffractant en réflexion est exposée dans la couche de matériau ou dans une autre couche de matériau ou dans une couche de la multiplicité des autres couches de matériau, ou une couche de matériau supplémentaire, où la structure de diffraction supplémentaire (401) présente une géométrie de diffraction supplémentaire (400) chez laquelle une direction d'exposition cible supplémentaire (405) de la lumière provoquant une diffraction et une direction de détection cible (415) sous laquelle la lumière diffractée en réflexion est détectable, forment un angle (495) au site d'incidence supplémentaire (480) qui est supérieur à l'angle aigu (190), et dans la mesure où la structure de diffraction supplémentaire (401) est exposée dans la couche de matériau supplémentaire, la couche de matériau supplémentaire est réunie avec la couche de matériau.

10. Procédé selon la revendication 9, **caractérisé en ce que**, dans la couche de matériau ou une autre couche de matériau, une autre structure de diffraction (301) différente de la structure de diffraction (101) est exposée, pour laquelle il existe une autre géométrie de diffraction (300) différente de la géométrie de diffraction (100), chez laquelle une autre direction d'exposition cible (305) de la lumière incidente et une autre direction de détection cible (315) sous laquelle la lumière diffractée en réflexion est détectable, forment au site d'incidence (380) un autre angle aigu (390), et dans la mesure où l'autre structure de diffraction (301) est marquée ou exposée dans l'autre couche de matériau, la couche de matériau et l'autre couche de matériau sont assemblées pour former un composite de lamination.

11. Procédé selon la revendication 9 ou la revendication 10, **caractérisé en ce que**, dans la couche de matériau ou une autre couche de matériau ou une multiplicité d'autres couches de matériau, une grand nombre d'autres structures de diffraction (301) sont marquées et/ou exposées, qui sont différentes de la de la structure de diffraction (101) et des structures restantes du grand nombre d'autres structures de diffraction (301), où, pour chacune du grand nombre des autres structures de diffraction (301), il existe une autre géométrie de diffraction (300), chez laquelle une autre direction d'exposition cible (305) de la lumière incidente et une autre direction de détection cible (315) sous laquelle la lumière diffractée en réflexion est détectable, forment un autre angle aigu (390) à l'autre site d'incidente (380), où l'autre géométrie de diffraction (300) est respectivement différente de la géométrie de diffraction (100) et des géométries de diffraction restantes (300) des structures restantes du grand nombre d'autres structures de diffraction (301), et dans la mesure où une structure du grand nombre de structures de diffraction (301) est exposée ou marquée dans l'autre couche de matériau ou l'une de la multiplicité des autres couches de matériau, la couche de matériau et l'autre couche de matériau, ou la couche de matériau et la multiplicité des autres couches de matériau, sont réunies pour former un composite de lamination.
